# EUROPEAN PATENT SPECIFICATION

(11) **EP 3 468 101 B1**
(45) Date of publication and mention of the grant of the patent: **16.06.2021**
(21) Application number: 17882160.9
(22) Date of filing: 21.07.2017
(51) Int. Cl.: H04L 12/24, H04L 12/26

(54) **METHOD FOR CONTROLLING NETWORK TRANSMISSION AND RELATED APPARATUS**
VERFAHREN ZUR STEUERUNG EINER NETZWERKÜBERTRAGUNG UND ZUGEHÖRIGE VORRICHTUNG
PROCÉDÉ DE CONTRÔLE DE TRANSMISSION RÉSEAU, ET DISPOSITIF ASSOCIÉ

(30) Priority: 16.12.2016 CN 201611170354
(43) Date of publication of application: 10.04.2019
(73) Proprietor: Huawei Technologies Co., Ltd., Longgang District Shenzhen, Guangdong 518129 (CN)
(72) Inventor: SHUAI, Ke, Shenzhen, Guangdong 518129 (CN)
(74) Representative: Pfenning, Meinig & Partner mbB
(86) International application number: PCT/CN2017/093886
(87) International publication number: WO 2018/107757

(56) References cited:
- WO-A1-2009/049292
- WO-A1-2015/149353
- WO-A1-2016/062165
- WO-A2-2007/101140
- CN-A- 101 026 504
- CN-A- 102 271 079
- CN-A- 103 716 172
- CN-A- 105 812 198
- CN-A- 105 812 198
- WU M WEXLER HUAWEI D ROMASCANU AVAYA T TAYLOR Q ET AL: "Problem Statement for Layer and Technology Independent OAM in a Multi- Layer Environment; draft-edprop-opsawg-multi-layer-oam-ps-02. txt", PROBLEM STATEMENT FOR LAYER AND TECHNOLOGY INDEPENDENT OAM IN A MULTI- LAYER ENVIRONMENT; DRAFT-EDPROP-OPSAWG-MULTI-LAYER-OAM-PS-02. TXT, INTERNET ENGINEERING TASK FORCE, IETF; STANDARDWORKINGDRAFT, INTERNET SOCIETY (ISOC) 4, RUE DES FALAISES CH- 1205, 27 September 2014 (2014-09-27), pages 1-16, XP015101851, [retrieved on 2014-09-27]

## Description

### TECHNICAL FIELD

The present invention relates to the communications field, and specifically, to a network transmission method and a related device.

### BACKGROUND

As a network becomes increasingly complex, the network may include devices supporting different protocols, for example, an Ethernet switch (ETH Switch) supporting the Ethernet (ETH) protocol, a customer edge (CE) device supporting the Internet Protocol (IP), and a Multiprotocol Label Switching provider (MPLS P) device or a Multiprotocol Label Switching provider edge (MPLS PE) device supporting the Multiprotocol Label Switching Protocol. In this case, an end to end (E2E) service passing through the network needs to cross a plurality of different protocol networks and protocol stacks. To manage and maintain the E2E service, operation, administration and maintenance (OAM) information of a network node through which the E2E service passes needs to be obtained.

Currently, because there is no uniform OAM technology, network nodes at different layers perform operations by using different OAM protocols and technologies, and OAM information of different network nodes are associated manually or automatically. For example, for IP/MPLS, first, OAM information in IP forwarding is obtained by using the IP Internet Control Message Protocol (IP ICMP). However, in this case, corresponding MPLS OAM information cannot be obtained. Therefore, an IP address of an edge (Provider Edge, PE) device through which the IP ICMP packet passes needs to be obtained by using an ICMP tracert command. Then, the PE device obtains corresponding MPLS OAM information by using an MPLS ping command, and finally, the IP OAM and the MPLS OAM are combined manually or automatically by using an operations support system (OSS). The operation process is complex, with low OAM information obtaining efficiency and poor effects.

WO 2009/049292 A1 describes network and performance monitoring in a link state protocol controlled Ethernet network. A first node receives a network layer monitoring command from a network layer monitoring requestor. The monitoring command is directed to a second node. The first node resolves the network layer monitoring command into one or more Ethernet OAM command(s); The first node sends the Ethernet OAM command(s) to the second node, receives the results of the Ethernet OAM command(s) from the second node; and returns the results of the Ethernet OAM command(s) in the form of a network layer response to the network layer monitoring requestor. Furthermore, network layer monitoring commands may be one or more performance monitoring commands, and the Ethernet OAM commands can include Y.1731 commands. An IP flow can be adjusted between the first node and the second node in response to the network layer response returned to the network layer monitoring requestor.

CN 105 812198 A discloses a method for bridged network end-to-end monitoring. According to the method, an OAM message is identified according to the generated OAM message characteristic information; according to a generated message format, an OAM function is actuated, and bridged network end-to-end OAM monitoring is accomplished. The invention further discloses a device for bridged network end-to-end monitoring. The method and the device are simple and easy to use, L2VPN and L3VPN bridged networks can be directly spanned, end-to-end OAM fault detection and performance measurement can be flexibly realized, and business monitoring can be conveniently and rapidly realized.

### SUMMARY

Embodiments of the present invention provide a network transmission method and a related device, so that OAM information in a network transmission control system including different protocol devices can be automatically collected.

According to a first aspect, an embodiment of the present invention provides a network transmission control method. The method is applied to a network transmission control system, the network transmission control system includes a source node device, a first node device, and a second node device, and the method includes: receiving, by the first node device, a first packet from the source node device, where the first packet carries Internet Protocol operation, administration and maintenance IP OAM information, and the IP OAM information includes an IP OAM command; then, generating, by the first node device, a second packet based on the first packet, where the second packet carries the IP OAM information in the first packet and operation, administration and maintenance OAM information of the first node device, the OAM information of the first node device includes an OAM command, and the OAM command of the first node device is the same as the IP OAM command; and then, sending, by the first node device, the second packet to the second node device, where the second node device is a next-hop node device of the first node device.

In the solution provided in this embodiment of the present invention, the first packet sent by the source node device carries the IP OAM information, so that the first node device through which the first packet passes can identify the first packet, determine the OAM command in the OAM information of the first node device based on the IP OAM command in the OAM information, and then, add the OAM information of the first node device to the first packet to generate the second packet. Therefore, the first node device on a path through which the first packet passes returns corresponding OAM result information to the source node device or an OAM controller based on the OAM information, so that OAM information of all node devices on an E2E path is automatically collected, OAM efficiency is improved, and further, control over network transmission stability is improved.

In the solution, before the sending, by the first node device, the second packet to the second node device, the method further includes: receiving, by the first node device, a notification message from the second node device, where the notification message is used to indicate a forwarding type used by the second node device; and then, when the first node device determines that the forwarding type used by the second node device is different from a forwarding type of the first node device, generating, by the first node device, OAM information of the second node device, where the OAM information of the second node device includes an OAM command, and the second packet further includes the OAM information of the second node device, and the OAM command in the OAM information of the second node device is the same as the IP OAM command. When obtaining the forwarding type of the second node device, the first node device may encapsulate the OAM information of the second node device in advance before sending the generated second packet to the second node device, so that the second node device can directly return OAM result information of the second node device to a CE or the OAM controller based on the OAM information in the second packet, to improve OAM efficiency.

In a possible design, the network transmission control system further includes a third node device, the third node device is a previous-hop node device of the first node device, the first packet is a packet that is from the source node device and that is forwarded by the third node device, the third node device is a layer 2 node device, and the first node device is a layer 3 node device; the first packet further carries OAM information of the third node device, the OAM information of the third node device includes an OAM command, and the OAM command of the third node device is the same as the IP OAM command; and
in the generating, by the first node device, a second packet based on the first packet, the method further includes: determining, by the first node device, that a forwarding manner of the first node device is layer 2 forwarding, and adding, by the first node device, layer 3 OAM information of the first node device to the first packet to generate the second packet, where the layer 3 OAM information includes a layer 3 OAM command, the layer 3 OAM command is the same as the IP OAM command, and the OAM information of the first node device includes the layer 3 OAM information of the first node device; or
determining, by the first node device, that a forwarding manner of the first node device is layer 3 forwarding, deleting, by the first node device, the OAM information of the third node device from the first packet, and adding the OAM information of the first node device, where the OAM information of the first node device is layer 3 OAM information.

In the foregoing manner, when the third node device is the layer 2 node device and the first node device is the layer 3 node device, a process of generating, based on the first packet including the OAM information of the third node device, the second packet including the OAM information of the second node device can be implemented.

In a possible design, the network transmission control system further includes a third node device, the third node device is a previous-hop node device of the first node device, the first packet is a packet that is from the source node device and that is forwarded by the third node device, the third node device is a layer 3 node device, and the first node device is a layer 2 node device; the first node device determines that a forwarding manner of the third node device is layer 2 forwarding, the first packet further carries OAM information of the third node device, the OAM information of the third node device includes layer 2 OAM information of the third node device and layer 3 OAM information of the third node device, the layer 2 OAM information includes a layer 2 OAM command, the layer 2 OAM command is the same as the IP OAM command, the layer 3 OAM information includes a layer 3 OAM command, and the layer 3 OAM command is the same as the IP OAM command; and
in the generating, by the first node device, a second packet based on the first packet, the method further includes: deleting, by the first node device, the layer 3 OAM information of the third node device from the first packet.

In the foregoing manner, when the third node device is the layer 3 node device, the forwarding manner of the third node device is the layer 2 forwarding, and the first node device is the layer 3 node device, a process of generating, based on the first packet including the OAM information of the third node device, the second packet including the OAM information of the second node device can be implemented.

In a possible design, the network transmission control system further includes a third node device, the third node device is a previous-hop node device of the first node device, the first packet is a packet that is from the source node device and that is forwarded by the third node device, the third node device is a layer 3 node device, and the first node device is a layer 2 node device; the first node device determines that a forwarding manner of the third node device is layer 3 forwarding, the first packet further carries OAM information of the third node device, the OAM information of the third node device includes layer 3 OAM information of the third node device, the layer 3 OAM information includes a layer 3 OAM command of the third node device, and the layer 3 OAM command is the same as the IP OAM command; and
in the generating, by the first node device, a second packet based on the first packet, the method further includes: deleting, by the first node device, the layer 3 OAM information from the first packet, and adding the OAM information of the first node device, where the OAM information of the first node device is layer 2 OAM information.

In the foregoing manner, when the third node device is the layer 3 node device, the forwarding manner of the third node device is the layer 3 forwarding, and the first node device is the layer 3 node device, a process of generating, based on the first packet including the OAM information of the third node device, the second packet including the OAM information of the second node device can be implemented.

In a possible design, the network transmission control system further includes a third node device, the third node device is a previous-hop node device of the first node device, the first packet is a packet that is from the source node device and that is forwarded by the third node device, the third node device is an Ethernet switch ETH switch, and the first node device is a Multiprotocol Label Switching provider edge MPLS PE device; the first packet further carries ETH OAM information, the ETH OAM information includes an ETH OAM command, and the ETH OAM command is the same as the IP OAM command; and
in the generating, by the first node device, a second packet based on the first packet, the method further includes: determining, by the first node device, that a forwarding manner of the first node device is layer 2 forwarding, and adding, by the first node device, MPLS OAM information to the first packet to generate the second packet, where the MPLS OAM information includes an MPLS OAM command, the MPLS OAM command is the same as the IP OAM command, and the MPLS OAM information is the OAM information of the first node device; or determining, by the first node device, that a forwarding manner of the first node device is layer 3 forwarding, deleting, by the first node device, the ETH OAM information from the first packet, and adding MPLS OAM information, where the OAM information of the first node device is the ETH OAM information. Therefore, when the third node device is the ETH switch and the first node device is the MPLS PE device, a process of generating, based on the first packet including the OAM information of the third node device, the second packet including the OAM information of the second node device is implemented.

In a possible design, the network transmission control system further includes a third node device, the third node device is a previous-hop node device of the first node device, the first packet is a packet that is from the source node device and that is forwarded by the third node device, the third node device is a Multiprotocol Label Switching provider edge MPLS PE device, and the first node device is an Ethernet switch ETH switch; the first node device determines that a forwarding manner of the third node device is layer 2 forwarding, the first packet further carries OAM information of the MPLS PE device, the OAM information of the MPLS PE device includes ETH OAM information and MPLS OAM information, the ETH OAM information includes an ETH OAM command, the ETH OAM command is the same as the IP OAM command, the MPLS OAM information includes an MPLS OAM command, and the MPLS OAM command is the same as the IP OAM command; and
in the generating, by the first node device, a second packet based on the first packet, the method further includes: deleting, by the first node device, the MPLS OAM information from the first packet. Therefore, when the third node device is the MPLS PE device, the forwarding manner of the third node device is the layer 2 forwarding, and the first node device is the ETH switch, a process of generating, based on the first packet including the OAM information of the third node device, the second packet including the OAM information of the second node device is implemented.

In a possible design, the network transmission control system further includes a third node device, the third node device is a previous-hop node device of the first node device, the first packet is a packet that is from the source node device and that is forwarded by the third node device, the third node device is a Multiprotocol Label Switching provider edge MPLS PE device, and the first node device is an Ethernet switch ETH switch; the first node device determines that a forwarding manner of the MPLS PE device is layer 3 forwarding, the first packet further carries OAM information of the MPLS PE device, the OAM information of the MPLS PE device includes MPLS OAM information, the MPLS OAM information includes an MPLS OAM command, and the MPLS OAM command is the same as the IP OAM command; and
in the generating, by the first node device, a second packet based on the first packet, the method further includes: deleting, by the first node device, the MPLS OAM information from the first packet, and adding the OAM information of the ETH switch, where the OAM information of the ETH switch is ETH OAM information. Therefore, when the third node device is the MPLS PE device, the forwarding manner of the third node device is the layer 3 forwarding, and the first node device is the ETH switch, a process of generating, based on the first packet including the OAM information of the third node device, the second packet including the OAM information of the second node device is implemented.

In a possible design, after the generating, by the first node device, a second packet based on the first packet, the method further includes: sending, by the first node device, a response packet to the source node device, where the response packet includes an OAM result corresponding to the OAM command of the first node device in the second packet.

In a possible design, after the generating, by the first node device, a second packet based on the first packet, the method further includes: sending, by the first node device, a response packet to the OAM controller, where the response packet includes an OAM result corresponding to the OAM command of the first node device in the second packet.

In this manner, the source node device or the OAM controller can automatically collect the OAM information of all the node devices on the E2E path, and associate the information, so that OAM information obtaining efficiency is high, and network transmission management is easily performed.

According to a second aspect, an embodiment of the present invention provides a first node device. The first node device has a function of implementing the first aspect. The function may be implemented by hardware, or may be implemented by hardware executing corresponding software. The hardware or software includes one or more modules corresponding to the function.

According to a third aspect, an embodiment of the present invention provides a first node device. The first node device includes a processor, a receiver, and a transmitter, and the processor is configured to support the first node device in performing corresponding functions in the method. The receiver and the transmitter are configured to support communication between the first node device and another device. Further, the first node device may further include a memory, and the memory is configured to: be coupled to the processor, and store a program instruction and data that are necessary for the first node device.

According to a fourth aspect, an embodiment of the present invention provides a computer storage medium, configured to store a computer software instruction used by the first node device in the second aspect, where the computer software instruction includes a program designed for performing the foregoing aspect.

Compared with the prior art, in the solutions provided in the embodiments of the present invention, the first packet sent by the source node device carries the IP OAM information, so that the first node device through which the first packet passes can identify the first packet, determine the OAM command in the OAM information of the first node device based on the IP OAM command in the OAM information, and then, add the OAM information of the first node device to the first packet to generate the second packet. Therefore, the first node device on a path through which the first packet passes returns corresponding OAM result information to the source node device or the OAM controller based on the OAM information, so that the OAM information of all the node devices on the E2E path is automatically collected, OAM efficiency is improved, and further, control over network transmission stability is improved.

### BRIEF DESCRIPTION OF DRAWINGS

Various aspects of the disclosure may be better understood upon reading the following detailed description and upon reference to the following drawings.
FIG. 1 is a schematic architectural diagram of a network transmission control system 100 according to an embodiment of the present invention;
FIG. 2-a is a schematic flowchart of a network transmission control method according to an embodiment of the present invention;

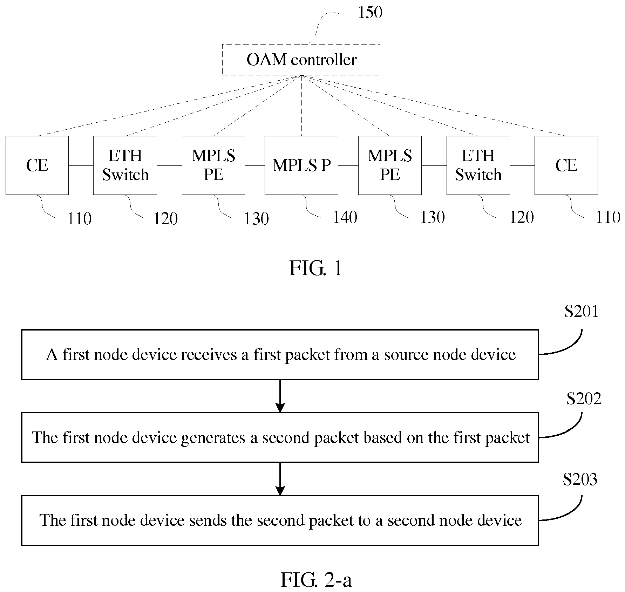

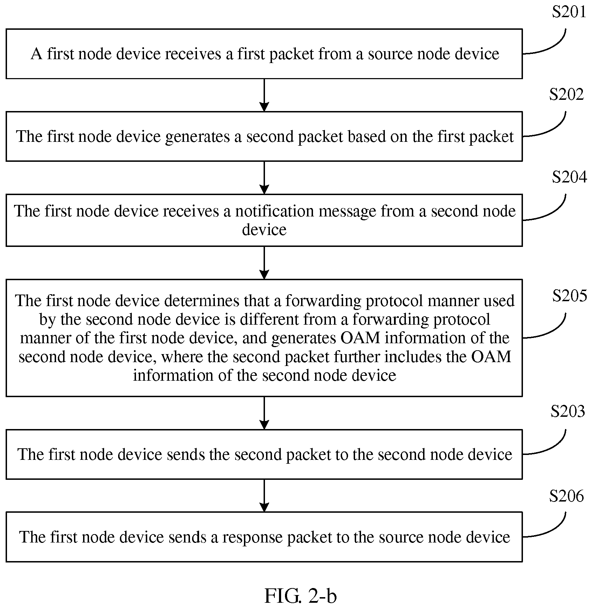

FIG. 2-b is a schematic flowchart of another network transmission control method according to an embodiment of the present invention;

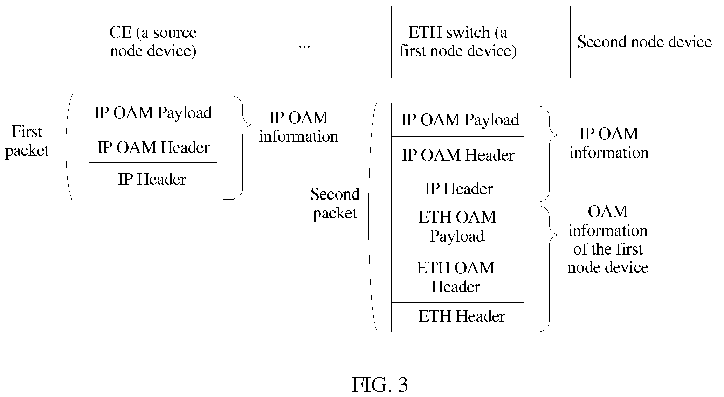

FIG. 3 is a schematic diagram of OAM information according to an embodiment of the present invention;

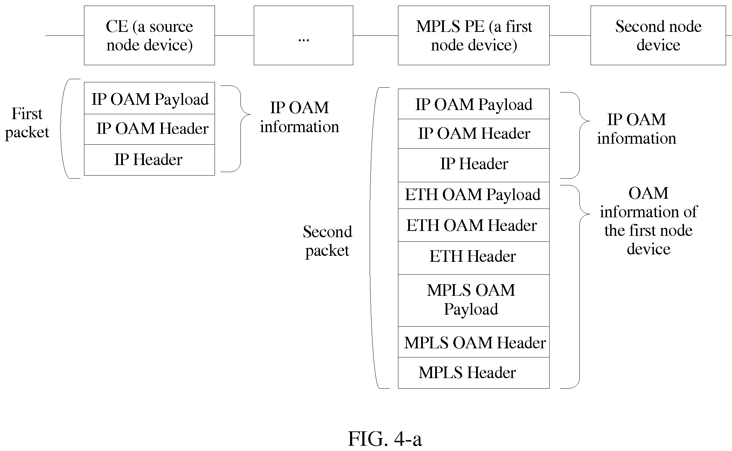

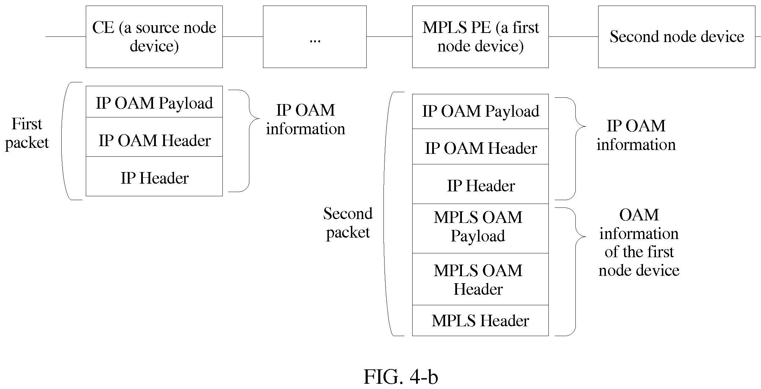

FIG. 4-a is a schematic diagram of another piece of OAM information according to an embodiment of the present invention;
FIG. 4-b is a schematic diagram of still another piece of OAM information according to an embodiment of the present invention;

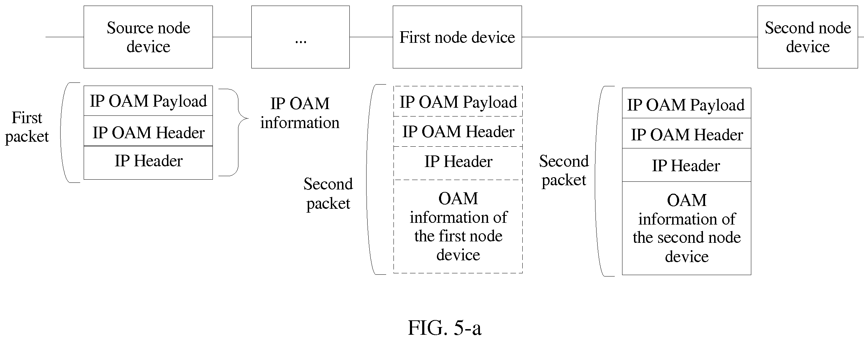

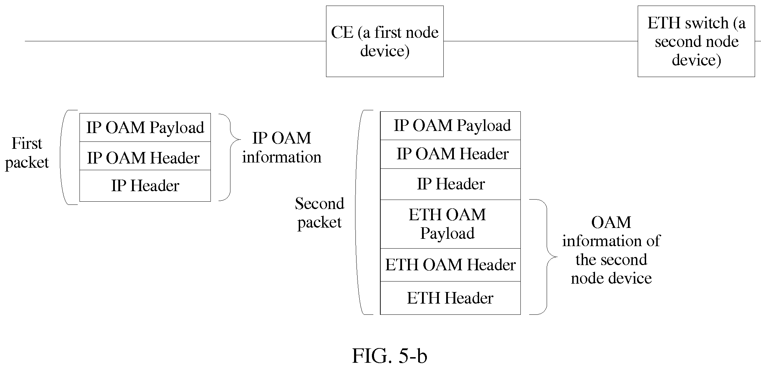

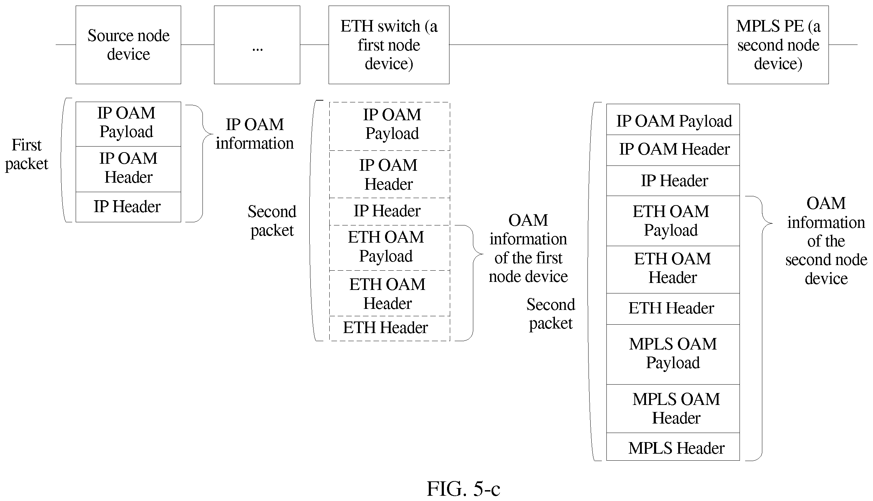

FIG. 5-a is a schematic diagram of sending a packet carrying OAM information according to an embodiment of the present invention;
FIG. 5-b is a schematic diagram of sending another packet carrying OAM information according to an embodiment of the present invention;
FIG. 5-c is a schematic diagram of sending still another packet carrying OAM information according to an embodiment of the present invention;

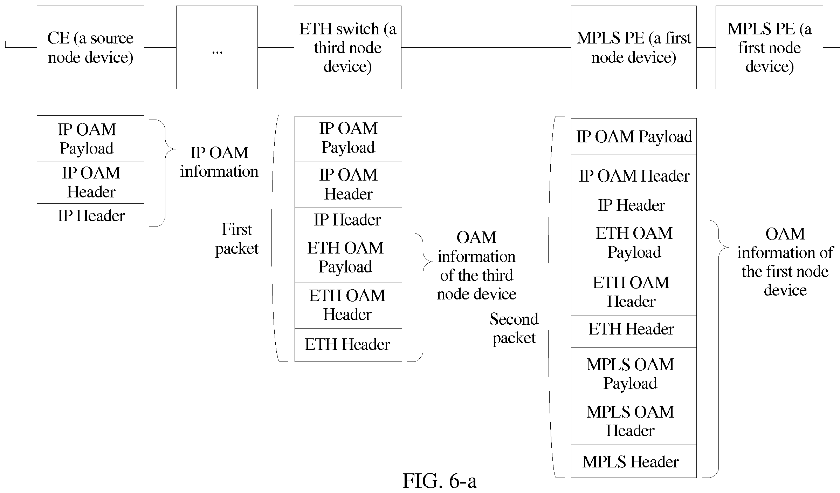

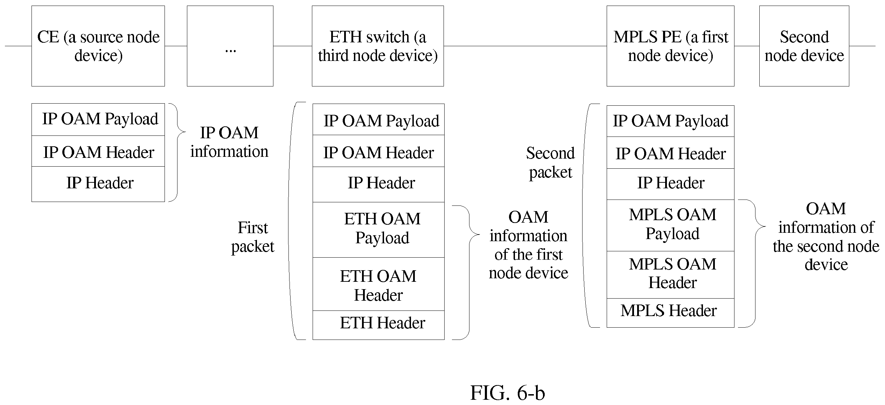

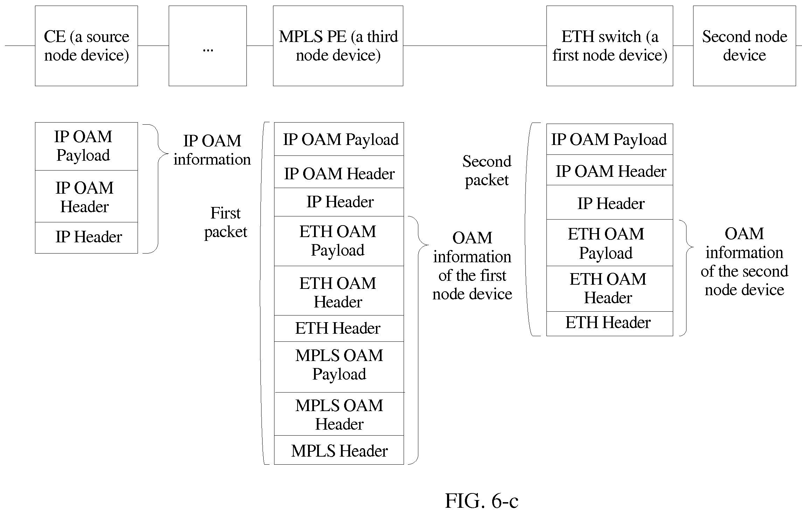

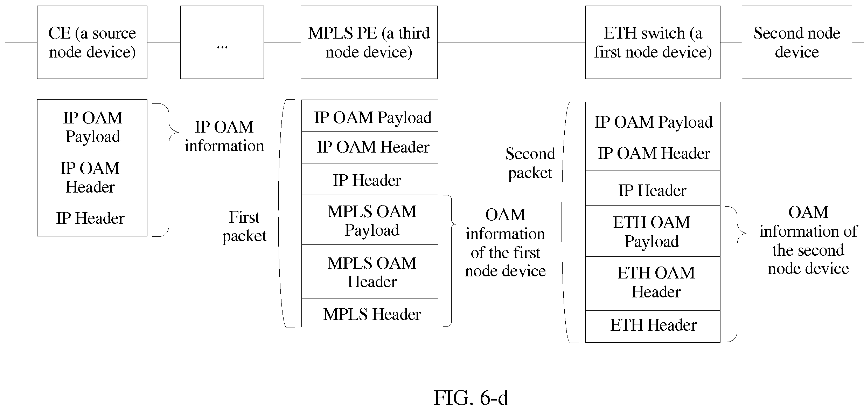

FIG. 6-a is a schematic diagram of generating a packet according to an embodiment of the present invention;
FIG. 6-b is a schematic diagram of generating another packet according to an embodiment of the present invention;
FIG. 6-c is a schematic diagram of generating still another packet according to an embodiment of the present invention;
FIG. 6-d is a schematic diagram of generating still another packet according to an embodiment of the present invention;

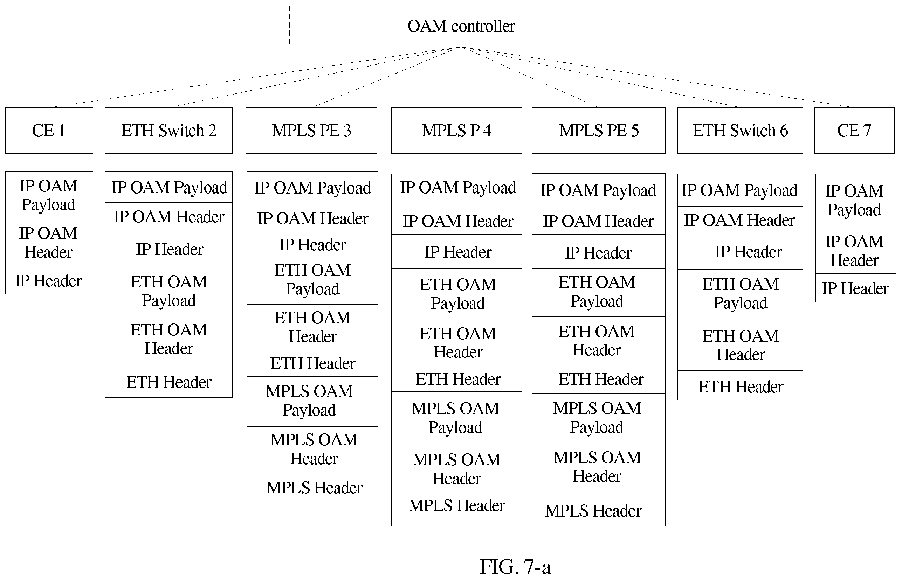

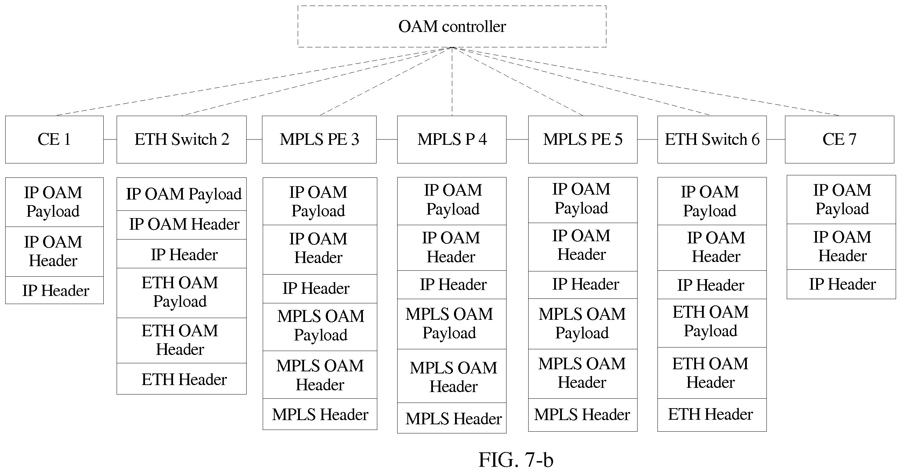

FIG. 7-a is a schematic diagram of an IP ICMP packet based on a network transmission control system according to an embodiment of the present invention;
FIG. 7-b is a schematic diagram of another IP ICMP packet based on a network transmission control system according to an embodiment of the present invention;

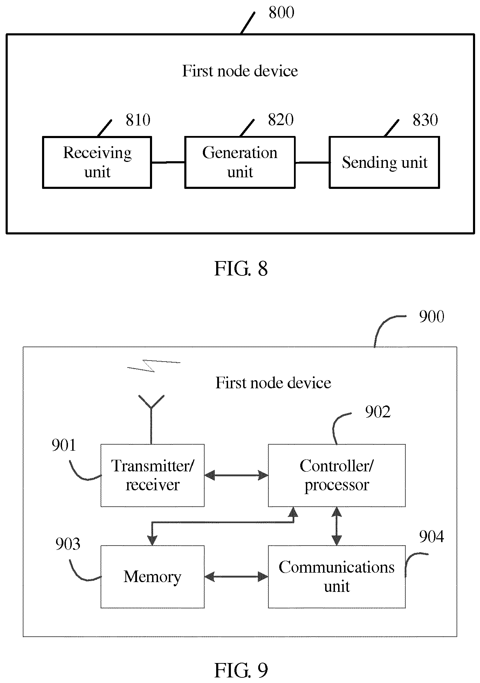

FIG. 8 is a schematic structural diagram of a first node device according to an embodiment of the present invention; and
FIG. 9 is a schematic structural diagram of another first node device according to an embodiment of the present invention.

### DESCRIPTION OF EMBODIMENTS

To make persons skilled in the art understand the technical solutions in the present invention better, the following clearly and completely describes the technical solutions in the embodiments of the present invention with reference to the accompanying drawings in the embodiments of the present invention.

To better understand the technical solutions of the present invention, first, an architecture of a network transmission control system is briefly described below.

First, FIG. 1 is a schematic architectural diagram of a network transmission control system 100 according to an embodiment of the present invention. A network transmission control method provided in the embodiments of the present invention is applied to the network transmission control system 100. As shown in FIG. 1, the network transmission control system may include a plurality of CEs 110, at least one ETH switch 120, at least one MPLS PE 130, and at least one MPLS P 140. Based on the network transmission control system, one E2E service may pass through some or all devices. Alternatively, one or more ETH switches 120, one or more MPLS PEs 130, and one or more MPLS Ps 140 may be further added to the network transmission control system shown in FIG. 1. This belongs to the scope used by the network transmission control method provided in the embodiments of the present invention.

In the network transmission control system, devices of different types use different network protocols. For example, the CEs 110 perform data transmission based on the IP protocol, the MPLS PEs 130 or the MPLS P 140 performs data transmission based on the MPLS protocol, and the ETH switches 120 perform data transmission based on the Ethernet protocol, so that devices of different types use different OAM protocols and technologies.

To monitor a network transmission process, OAM information of the devices may be obtained by using OAM, to implement monitoring. However, because devices of different types use different OAM protocols and technologies, association cannot be performed directly, but needs to be performed manually or through OSS adaptation, leading to low efficiency and a poor effect.

For example, when association is performed manually, if IP OAM information and MPLS OAM information in one network need to be associated, first, OAM information in IP forwarding may be obtained through the IP ICMP, then, IP of a PE device through which the IP ICMP packet passes is obtained by using ICMP tracert, then, the PE device obtains corresponding MPLS information by using MPLS ping, and finally, the information is associated manually.

During automatic association, an OSS may switch manual association to automatic association. For example, the IP ICMP runs on the OSS, to obtain an IP address of each node through which the IP ICMP packet passes. The OSS learns of IP and a network location of each device, queries a corresponding PE node by using the IP address obtained through the IP ICMP. The PE node starts the MPLS PING, and obtains MPLS information on a corresponding network element, and the OSS sequentially associates the obtained information.

It can be learned from the foregoing description that regardless of manual association or automatic association, OAM information of different devices needs to be obtained on the devices by using different OAM commands, and the obtained OAM information is combined, leading to a complex operation and low association efficiency. To address the foregoing problem, the embodiments of the present invention provide a network transmission control method. Detailed description is provided below.

In the embodiments of the present invention, when information of each node device is obtained by using an OSS, the network transmission control system may further include an OAM controller 150. The OAM controller 150 is connected to each network device, to communicate with the network device, to obtain OAM information of the network device from the network device.

FIG. 2-a is a schematic flowchart of a network transmission control method according to an embodiment of the present invention. The network transmission control method is applied to a network transmission control system, and the network transmission control system includes a source node device, a first node device, and a second node device. The source node device may be a CE in the network transmission control system, the first node device may be any network device in the network transmission control system, and the second node device is a next-hop node device of the first node device, or may be any network device in the network transmission control system. As shown in FIG. 2-a, the method includes the following steps.

Step S201. The first node device receives a first packet from the source node device.

The first packet carries IP OAM information, and the IP OAM information includes an IP OAM command.

Optionally, in an embodiment of the present invention, the source node device may be a previous-hop node device of the first node device, and then, the first node device directly receives the first packet from the source node device. In this way, the first node device may be considered as a node device that is directly connected to the source node device by using a link or a transparent transmission device.

Optionally, in another embodiment of the present invention, the source node device may transmit the first packet to the first node device by using at least one intermediate node device, and then, the first node device does not directly receive the first packet from the source node device. In this way, the first node device may be considered as any intermediate node device or destination node device other than a device directly connected to the source node device.

Optionally, in an embodiment of the present invention, the source node device may be a CE, and the first packet is an IP ICMP packet. Specifically, when a source CE sends an IP ICMP packet to a destination CE, an ICMP protocol number 01 is used, and in this case, a new protocol type may be defined, for example, 50.

It may be understood that a transmission protocol supported by the first packet is the same as a transmission protocol supported by the source node device.

Optionally, the first packet may further include other information. Specifically, FIG. 3 is a schematic diagram of OAM information according to an embodiment of the present invention, FIG. 4-a is a schematic diagram of another piece of OAM information according to an embodiment of the present invention, and FIG. 4-b is a schematic diagram of still another piece of OAM information according to an embodiment of the present invention. As shown in the figures, it may be learned that an IP OAM payload in the first packet is used to carry the IP OAM command, and the first packet may further include an IP OAM header and an IP header, where the IP header is an IP frame header. The IP OAM header is used so that when the packet arrives at a destination device at a same network layer, the destination device can identify the IP OAM information. For example, when the destination CE device receives the IP ICMP packet sent by the source CE device, the destination CE device may identify the IP OAM information by using the IP OAM header.

Step S202. The first node device generates a second packet based on the first packet.

The second packet carries the IP OAM information in the first packet and operation, administration and maintenance OAM information of the first node device, the OAM information of the first node device includes an OAM command, and the OAM command of the first node device is the same as the IP OAM command.

Specifically, the first node device can identify the IP ICMP packet, and therefore can identify the IP OAM information in the first packet. The first node device then obtains content of the IP OAM command, and adds, based on the IP OAM command, the OAM command that is of the first node device itself and that is the same as the IP OAM command, to generate the second packet.

Furthermore, in this case, the first node device returns corresponding OAM result information to the source CE or an OAM controller based on the OAM command in the second packet, so that OAM information of a node on a path through which the first packet passes can be automatically collected by using the first packet.

Optionally, in an embodiment of the present invention, the first node device may be a layer 2 node device, for example, an ETH switch. In this case, the OAM information of the first node device is ETH OAM information. Because the ETH switch can identify the IP ICMP packet, content of an ETH OAM command can be determined based on the IP OAM command in the IP ICMP packet.

Specifically, referring to FIG. 3, if the first node device is the ETH switch, based on the first packet, the second packet further includes the OAM information of the first node device. An OAM payload in the OAM information of the first node device is used to carry the OAM command of the first node device. In this case, the OAM command is the ETH OAM command, and the content of the ETH OAM command is the same as content of the IP OAM command. For example, if the IP OAM command is a trace route command tracert, the content of the ETH OAM command is also the trace route command tracert. Certainly, a specific carrying form of a command is changed based on a format stipulated by a packet, and this is not limited in this embodiment of the present invention.

Optionally, the OAM information of the first node device may further include other information. Referring to FIG. 3, the OAM information may further include an ETH OAM header and an ETH header. The ETH OAM header is an Ethernet OAM header, and the ETH header is an Ethernet frame header.

Optionally, in another embodiment of the present invention, the first node device may be alternatively a layer 3 node device, for example, an MPLS PE device or an MPLS P device. If a forwarding manner supported by the MPLS PE device or the MPLS P device is layer 2 forwarding, it may be determined, based on an IP protocol forwarding manner, that the OAM information of the first node device is ETH OAM information or MPLS OAM information. Because the MPLS PE device or the MPLS P device can identify the IP ICMP packet, content of an ETH OAM command and content of an MPLS OAM command can be determined based on the IP OAM command in the IP ICMP packet. The ETH OAM information includes the ETH OAM command, and the ETH OAM command is the same as the IP OAM command. The MPLS OAM information includes the MPLS OAM command, and the MPLS OAM command is the same as the IP OAM command.

Specifically, referring to FIG. 4-a, it may be learned that based on the first packet, the second packet further includes the OAM information of the first node device. The OAM information of the first node device includes ETH OAM information and MPLS OAM information. An ETH OAM payload in the ETH OAM information is used to carry the OAM command of the first node device. In this case, the OAM command is an ETH OAM command, and content of the ETH OAM command is the same as content of the IP OAM command. For example, if the IP OAM command is a trace route command tracert, the content of the ETH OAM command is also the trace route command tracert. An MPLS OAM payload in the MPLS OAM information is used to carry the OAM command of the first node device. In this case, the OAM command is an MPLS OAM command, and content of the MPLS OAM command is the same as the content of the IP OAM command. For example, if the IP OAM command is the trace route command tracert, content of the MPLS OAM command is also the trace route command tracert. Certainly, a specific carrying form of a command is changed based on a format stipulated by a packet, and this is not limited in this embodiment of the present invention.

Optionally, if a forwarding manner supported by the MPLS PE device or the MPLS P device is layer 3 forwarding, it may be determined, based on IP protocol forwarding, that the OAM information of the first node device is the ETH OAM information. The ETH OAM information includes the ETH OAM command, and the ETH OAM command is the same as the IP OAM command.

Optionally, if the forwarding manner supported by the MPLS PE device or the MPLS P device is the layer 3 forwarding, the OAM information of the first node device may further include the MPLS OAM information. However, there is no essential meaning to return corresponding OAM information based on the MPLS OAM information, that is, in this case, no corresponding OAM information is returned based on the MPLS OAM information.

Optionally, the OAM information of the first node device may further include other information. For example, the OAM information may further include an ETH OAM header and an ETH header. The ETH OAM header is an Ethernet OAM header, and the ETH header is an Ethernet frame header. In addition, the OAM information further includes an MPLS OAM header and an MPLS header.

Specifically, referring to FIG. 4-b, it may be learned that based on the first packet, the second packet further includes the OAM information of the first node device. The OAM information of the first node device includes ETH OAM information. An ETH OAM payload in the ETH OAM information is used to carry the OAM command of the first node device. In this case, the OAM command is an ETH OAM command, and content of the ETH OAM command is the same as content of the IP OAM command. For example, if the IP OAM command is a trace route command tracert, the content of the ETH OAM command is also the trace route command tracert. Certainly, a specific carrying form of a command is changed based on a format stipulated by a packet, and this is not limited in this embodiment of the present invention.

Optionally, the OAM information of the first node device may further include other information. Referring to FIG. 4-b, for example, the OAM information may further include an ETH OAM header and an ETH header, where the ETH OAM header is an Ethernet OAM header, and the ETH header is an Ethernet frame header.

Optionally, the first node device may be alternatively considered as a CE device. In this case, the OAM information of the first node device is empty. In this case, it may be considered that no new OAM information is added to the first packet.

Step S203. The first node device sends the second packet to the second node device.

It may be learned that in this embodiment of the present invention, the first packet sent by the source node device carries the IP OAM information, so that the first node device through which the first packet passes can identify the first packet, determine the OAM command in the OAM information of the first node device based on the IP OAM command in the OAM information, and then, add the OAM information of the first node device to the first packet to generate the second packet. Therefore, the first node device on a path through which the first packet passes returns corresponding OAM result information to the source node device or the OAM controller based on the OAM information, so that OAM information of all node devices on an E2E path is automatically collected, OAM efficiency is improved, and further, control over network transmission stability is improved.

Optionally, in an embodiment of the present invention, before the sending, by the first node device, the second packet to the second node device, the method further includes step S204 to step S206. FIG. 2-b is a schematic flowchart of another network transmission control method according to an embodiment of the present invention. The schematic flowchart shows a network transmission control method in a scenario in which the first node device may obtain a forwarding manner of the second node device in advance. Detailed description is as follows.

Step S204. The first node device receives a notification message from the second node device.

The notification message is used to indicate a forwarding type used by the second node device.

The forwarding type is used to identify a forwarding protocol used by the second node device, and identify that a forwarding manner in the forwarding protocol is specifically layer 2 forwarding or layer 3 forwarding.

Optionally, in an embodiment of the present invention, if the second node device is an ETH switch, the notification message indicates that the forwarding type used by the second node device is layer 2 Ethernet forwarding.

Optionally, in another embodiment of the present invention, if the second node device is an MPLS PE device or MPLS P device, the notification message may indicate that the forwarding type used by the second node device is layer 2 MPLS label forwarding or layer 3 MPLS label forwarding.

Optionally, in an embodiment of the present invention, if the second node device is a CE, the notification message may indicate that the forwarding type used by the second node device is IP routing and forwarding.

Optionally, in an embodiment of the present invention, the first node device obtains, by using the Link Layer Discovery Protocol (LLDP), the forwarding type used by the second node device. Specifically, in this case, the notification message may be a neighbor discovery message.

Optionally, in another embodiment of the present invention, the first node device may alternatively obtain a type manner of the second node device in another manner.

It should be noted that in this case, the first node device may be alternatively a source node device. To be specific, the source node device may obtain a forwarding type of a next-hop node device of the source node device, and encapsulate OAM information of the next-hop node device in advance.

Step S205. The first node device determines that the forwarding type used by the second node device is different from a forwarding type of the first node device, and generates OAM information of the second node device, where the OAM information of the second node device includes an OAM command.

The second packet further includes the OAM information of the second node device, and the OAM command in the OAM information of the second node device is the same as the IP OAM command.

In this embodiment of the present invention, when obtaining the forwarding type of the second node device, the first node device may encapsulate the OAM information of the second node device in advance before sending the generated second packet to the second node device. To be specific, it may be considered that in this case, the OAM information of the first node device in the second packet is deleted, the OAM information of the second node device is added, and the second packet is sent to the second node device. Therefore, the second node device may directly return OAM result information of the second node device to the CE or the OAM controller based on the OAM information in the second packet.

It should be noted that a manner of determining the OAM information of the second node device is the same as a manner of determining the OAM information of the first node device in step S202, that is, the OAM information is determined based on a device type and the forwarding type of the second node device, and details are not described herein again. For details, refer to FIG. 5-a, FIG. 5-b, and FIG. 5-c. FIG. 5-a is a schematic diagram of sending a packet carrying OAM information according to an embodiment of the present invention. FIG. 5-b is a schematic diagram of sending another packet carrying OAM information according to an embodiment of the present invention, and in FIG. 5-b, description is provided by using an example in which the first node device is a CE device and the second node device is an ETH switch device. FIG. 5-c is a schematic diagram of sending still another packet carrying OAM information according to an embodiment of the present invention, and in FIG. 5-c, description is provided by using an example in which the first node device is an ETH switch device and the second node device is an MPLS PE device using layer 2 forwarding.

Optionally, in an embodiment of the present invention, the network transmission control system further includes a third node device, the third node device is a previous-hop node device of the first node device, the first packet is a packet that is from the source node device and that is forwarded by the third node device, the third node device is a layer 2 node device, and the first node device is a layer 3 node device. The first packet further carries OAM information of the third node device, the OAM information of the third node device includes an OAM command, and the OAM command of the third node device is the same as the IP OAM command.

In the generating, by the first node device, a second packet based on the first packet, the method further includes:
determining, by the first node device, that a forwarding manner of the first node device is layer 2 forwarding, and adding, by the first node device, layer 3 OAM information of the first node device to the first packet to generate the second packet, where the layer 3 OAM information includes a layer 3 OAM command, the layer 3 OAM command is the same as the IP OAM command, and the OAM information of the first node device includes the layer 3 OAM information of the first node device; or
determining, by the first node device, that a forwarding manner of the first node device is layer 3 forwarding, deleting, by the first node device, the OAM information of the third node device from the first packet, and adding the OAM information of the first node device, where the OAM information of the first node device is layer 3 OAM information.

Specifically, if the third node device is an Ethernet switch ETH switch, and the first node device is a Multiprotocol Label Switching provider edge MPLS PE device, the first packet further carries ETH OAM information, the ETH OAM information includes an ETH OAM command, and the ETH OAM command is the same as the IP OAM command.

In the generating, by the first node device, a second packet based on the first packet, the method further includes:
determining, by the first node device, that a forwarding manner of the first node device is layer 2 forwarding, and adding, by the first node device, MPLS OAM information to the first packet to generate the second packet, where the MPLS OAM information includes an MPLS OAM command, the MPLS OAM command is the same as the IP OAM command, and the MPLS OAM information is the OAM information of the first node device, and for details, refer to FIG. 6-a, and FIG. 6-a is a schematic diagram of generating a packet according to an embodiment of the present invention; or
determining, by the first node device, that a forwarding manner of the first node device is layer 3 forwarding, deleting, by the first node device, the ETH OAM information from the first packet, and adding MPLS OAM information, where the OAM information of the first node device is ETH OAM information, and for details, refer to FIG. 6-b, and FIG. 6-b is a schematic diagram of generating another packet according to an embodiment of the present invention.

It may be understood that in the foregoing manner, when the third node device is the layer 2 node device and the first node device is the layer 3 node device, a process of generating, based on the first packet including the OAM information of the third node device, the second packet including the OAM information of the second node device can be implemented.

Optionally, in an embodiment of the present invention, the network transmission control system further includes a third node device, the third node device is a previous-hop node device of the first node device, the first packet is a packet that is from the source node device and that is forwarded by the third node device, the third node device is a layer 3 node device, and the first node device is a layer 2 node device. The first node device determines that a forwarding manner of the third node device is layer 2 forwarding, the first packet further carries OAM information of the third node device, the OAM information of the third node device includes layer 2 OAM information of the third node device and layer 3 OAM information of the third node device, the layer 2 OAM information includes a layer 2 OAM command, the layer 2 OAM command is the same as the IP OAM command, the layer 3 OAM information includes a layer 3 OAM command, and the layer 3 OAM command is the same as the IP OAM command.

In the generating, by the first node device, a second packet based on the first packet, the method further includes:
deleting, by the first node device, the layer 3 OAM information of the third node device from the first packet.

Specifically, if the third node device is a Multiprotocol Label Switching provider edge MPLS PE device, the first node device is an Ethernet switch ETH switch, the first node device determines that a forwarding manner of the third node device is layer 2 forwarding, the first packet further carries OAM information of the MPLS PE device, the OAM information of the MPLS PE device includes ETH OAM information and MPLS OAM information, the ETH OAM information includes an ETH OAM command, the ETH OAM command is the same as the IP OAM command, the MPLS OAM information includes an MPLS OAM command, and the MPLS OAM command is the same as the IP OAM command,
in the generating, by the first node device, a second packet based on the first packet, the method further includes:
deleting, by the first node device, the MPLS OAM information from the first packet, where for details, refer to FIG. 6-c, and FIG. 6-c is a schematic diagram of generating still another packet according to an embodiment of the present invention.

It may be understood that in the foregoing manner, when the third node device is the layer 3 node device, the forwarding manner of the third node device is the layer 2 forwarding, and the first node device is the layer 3 node device, a process of generating, based on the first packet including the OAM information of the third node device, the second packet including the OAM information of the second node device can be implemented.

Optionally, in an embodiment of the present invention, the network transmission control system further includes a third node device, the third node device is a previous-hop node device of the first node device, the first packet is a packet that is from the source node device and that is forwarded by the third node device, the third node device is a layer 3 node device, and the first node device is a layer 2 node device. The first node device determines that a forwarding manner of the third node device is layer 3 forwarding, the first packet further carries OAM information of the third node device, the OAM information of the third node device includes layer 3 OAM information of the third node device, the layer 3 OAM information includes a layer 3 OAM command of the third node device, and the layer 3 OAM command is the same as the IP OAM command.

In the generating, by the first node device, a second packet based on the first packet, the method further includes:
deleting, by the first node device, the layer 3 OAM information from the first packet, and adding the OAM information of the first node device, where the OAM information of the first node device is layer 2 OAM information.

Specifically, if the third node device is a Multiprotocol Label Switching provider edge MPLS PE device, and the first node device is an Ethernet switch ETH switch,
the first node device determines that a forwarding manner of the MPLS PE device is layer 3 forwarding, the first packet further carries OAM information of the MPLS PE device, the OAM information of the MPLS PE device includes MPLS OAM information, the MPLS OAM information includes an MPLS OAM command, and the MPLS OAM command is the same as the IP OAM command.

In the generating, by the first node device, a second packet based on the first packet, the method further includes:
deleting, by the first node device, the MPLS OAM information from the first packet, and adding the OAM information of the ETH switch, where the OAM information of the ETH switch is ETH OAM information.

For details, refer to FIG. 6-d, and FIG. 6-d is a schematic diagram of generating still another packet according to an embodiment of the present invention.

It may be understood that in the foregoing manner, when the third node device is the layer 3 node device, the forwarding manner of the third node device is the layer 3 forwarding, and the first node device is the layer 3 node device, a process of generating, based on the first packet including the OAM information of the third node device, the second packet including the OAM information of the second node device can be implemented.

Optionally, in an embodiment of the present invention, after the generating, by the first node device, a second packet based on the first packet, the method further includes the following step:
Step S206. The first node device sends a response packet to the source node device, where the response packet includes an OAM result corresponding to the OAM command of the first node device in the second packet.

Optionally, in another embodiment of the present invention, after the generating, by the first node device, a second packet based on the first packet, the method further includes:
sending, by the first node device, a response packet to the OAM controller, where the response packet includes an OAM result corresponding to the OAM command of the first node device in the second packet.

Specifically, in an embodiment of the present invention, the response packet is an IP ICMP packet.

Specifically, in an embodiment of the present invention, if the OAM command is a trace route command tracert, trace result information may be returned to the source node device or the OAM controller.

It may be understood that after the first node device generates the second packet based on the first packet, because the second packet includes the OAM information of the first node device, a corresponding OAM result may be obtained based on the OAM information, and then, the first node device sends a packet carrying the OAM result to the source node device or the OAM controller. In this embodiment of the present invention, because the first node device may be all node devices on an E2E path, in this manner, the source node device or the OAM controller may automatically collect OAM information of all the node devices on the E2E path, and associate the information, so that OAM information obtaining efficiency is high and network transmission management is easily performed.

To better understand the solution, a specific example is used for description below. FIG. 7-a is a schematic diagram of an IP ICMP packet based on a network transmission control system according to an embodiment of the present invention, and FIG. 7-b is a schematic diagram of another IP ICMP packet based on a network transmission control system according to an embodiment of the present invention. In FIG. 7-a, forwarding manners of the MPLS P device and the MPLS PE device in the network transmission control system are layer 2 forwarding. In FIG. 7-b, forwarding manners of the MPLS P device and the MPLS PE device in the network transmission control system are layer 3 forwarding. As shown in FIG. 7-a and FIG. 7-b, the following process is executed to obtain routing information of all the node devices on the E2E path.
1. First, a CE 1 sends an IP ICMP packet to an ETH switch 2. IP OAM TLV (Type Length Value) is added to the IP ICMP packet, may be specifically a trace route command tracert, and is used to instruct to return the routing information of all the routing nodes on the E2E path, a corresponding ETH header is encapsulated into the IP ICMP packet according to processing in the standard, and the IP ICMP packet is sent to the ETH switch 2.
2. After receiving the IP ICMP packet from the CE 1, the ETH switch 2 needs to identify the IP OAM protocol, convert a tracert requirement in the IP ICMP packet into MAC tracert of ETH OAM information, generate a new IP ICMP packet, and send the IP ICMP packet to an MPLS P 3. In addition, the ETH switch 2 adds corresponding trace result information to the packet, and returns the packet to the OAM controller or the CE.
3. As shown in FIG. 7-a, when an MPLS PE 3 uses layer 2 forwarding, the MPLS PE 3 deletes the ETH OAM information from the packet sent by the ETH switch 2, adds MPLS OAM information to generate a new IP ICMP packet, and sends the IP ICMP packet to an MPLS P 4. At the same time, the MPLS PE 3 adds corresponding trace result information to the packet, and returns the packet to the OAM controller or the CE 1.
   Alternatively, as shown in FIG. 7-b, when an MPLS PE 3 uses layer 3 forwarding, the MPLS PE 3 adds MPLS OAM information to the packet sent by the ETH switch 2, to generate a new IP ICMP packet, and sends the IP ICMP packet to an MPLS P 4. At the same time, the MPLS PE 3 adds corresponding trace result information to the packet, and returns the packet to the OAM controller or the CE 1.
4. The MPLS P 4 adds corresponding trace result information to the received IP ICMP packet sent by the MPLS PE 3, returns the IP ICMP packet to the OAM controller or the CE 1, and at the same time, sends the IP ICMP packet to an MPLS PE 5.
5. The MPLS PE 5 adds corresponding trace result information to the received IP ICMP packet sent by the MPLS P 4, returns the IP ICMP packet to the OAM controller or the CE 1, and at the same time, sends the IP ICMP packet to an ETH switch 6.
6. When receiving the IP ICMP packet sent by the MPLS PE 5, the ETH switch 6 identifies the IP OAM protocol, deletes the MPLS OAM information to generate a new IP ICMP packet, and sends the IP ICMP packet to the CE 1. At the same time, the ETH switch 6 adds corresponding trace result information to the packet, and returns the packet to the OAM controller or the CE 1.
7. After receiving the IP ICMP packet from the ETH switch 6, the CE 1 adds corresponding trace result information to the IP ICMP packet, and returns the IP ICMP packet to the OAM controller or the CE 1.

It should be noted that in this embodiment of the present invention, the first node device may be any one of the foregoing node devices 1 to 6.

In the foregoing process, all trace result information on the E2E path is automatically collected by using IP ICMP, so that an operation is easily performed, and OAM information collection efficiency is high.

FIG. 8 is a schematic structural diagram of a first node device according to an embodiment of the present invention, where the first node device is configured to implement the network transmission control method disclosed in the embodiments of the present invention. The first node device belongs to the network transmission control system 100. As shown in FIG. 8, a first node device 800 provided in this embodiment of the present invention may include:
a receiving unit 810, a generation unit 820, and a sending unit 830.

The receiving unit 810 is configured to receive a first packet from the source node device, where the first packet carries Internet Protocol operation, administration and maintenance IP OAM information, and the IP OAM information includes an IP OAM command.

The generation unit 820 is configured to generate a second packet based on the first packet, where the second packet carries the IP OAM information in the first packet and operation, administration and maintenance OAM information of the first node device 800, the OAM information of the first node device 800 includes an OAM command, and the OAM command of the first node device 800 is the same as the IP OAM command.

The sending unit 830 is configured to send the second packet to the second node device, where the second node device is a next-hop node device of the first node device 800.

Optionally, in an embodiment of the present invention, the receiving unit 810 is further configured to receive a notification message from the second node device, where the notification message is used to indicate a forwarding protocol used by the second node device.

The generation unit 820 is further configured to: determine that the forwarding protocol used by the second node device is different from a forwarding protocol of the first node device 800, and generate OAM information of the second node device, where the OAM information of the second node device includes an OAM command.

The second packet further includes the OAM information of the second node device, and the OAM command in the OAM information of the second node device is the same as the IP OAM command.

Optionally, in an embodiment of the present invention, the network transmission control system further includes a third node device, the third node device is a previous-hop node device of the first node device 800, the first packet is a packet that is from the source node device and that is forwarded by the third node device, the third node device is a layer 2 node device, and the first node device 800 is a layer 3 node device.

The first packet further carries OAM information of the third node device, the OAM information of the third node device includes an OAM command, and the OAM command of the third node device is the same as the IP OAM command.

The generation unit 820 is specifically configured to: determine that a forwarding manner of the first node device 800 is layer 2 forwarding, and add layer 3 OAM information of the first node device 800 to the first packet to generate the second packet, where the layer 3 OAM information includes a layer 3 OAM command, the layer 3 OAM command is the same as the IP OAM command, and the OAM information of the first node device 800 includes the layer 3 OAM information of the first node device 800; or
determine that a forwarding manner of the first node device 800 is layer 3 forwarding, delete the OAM information of the third node device from the first packet, and add the OAM information of the first node device 800, where the OAM information of the first node device 800 is layer 3 OAM information.

Optionally, in an embodiment of the present invention, the network transmission control system further includes a third node device, the third node device is a previous-hop node device of the first node device 800, the first packet is a packet that is from the source node device and that is forwarded by the third node device, the third node device is a layer 3 node device, and the first node device 800 is a layer 2 node device.

The first node device 800 determines that a forwarding manner of the third node device is layer 2 forwarding, the first packet further carries OAM information of the third node device, the OAM information of the third node device includes layer 2 OAM information of the third node device and layer 3 OAM information of the third node device, the layer 2 OAM information includes a layer 2 OAM command, the layer 2 OAM command is the same as the IP OAM command, the layer 3 OAM information includes a layer 3 OAM command, and the layer 3 OAM command is the same as the IP OAM command.

The generation unit 820 is specifically configured to delete the layer 3 OAM information of the third node device from the first packet.

Optionally, in an embodiment of the present invention, the network transmission control system further includes a third node device, the third node device is a previous-hop node device of the first node device 800, the first packet is a packet that is from the source node device and that is forwarded by the third node device, the third node device is a layer 3 node device, and the first node device 800 is a layer 2 node device.

The first node device 800 determines that a forwarding manner of the third node device is layer 3 forwarding, the first packet further carries OAM information of the third node device, the OAM information of the third node device includes layer 3 OAM information of the third node device, the layer 3 OAM information includes a layer 3 OAM command of the third node device, and the layer 3 OAM command is the same as the IP OAM command.

The generation unit 820 is specifically configured to: delete the layer 3 OAM information from the first packet, and add the OAM information of the first node device 800, where the OAM information of the first node device 800 is layer 2 OAM information.

Optionally, in an embodiment of the present invention, the network transmission control system further includes a third node device, the third node device is a previous-hop node device of the first node device 800, the first packet is a packet that is from the source node device and that is forwarded by the third node device, the third node device is an Ethernet switch ETH switch, and the first node device 800 is a Multiprotocol Label Switching provider edge MPLS PE device.

The first packet further carries ETH OAM information, the ETH OAM information includes an ETH OAM command, and the ETH OAM command is the same as the IP OAM command.

The generation unit 820 is specifically configured to:
determine that a forwarding manner of the first node device 800 is layer 2 forwarding, and add MPLS OAM information to the first packet to generate the second packet, where the MPLS OAM information includes an MPLS OAM command, the MPLS OAM command is the same as the IP OAM command, and the MPLS OAM information is the OAM information of the first node device 800; or
determine that a forwarding manner of the first node device 800 is layer 3 forwarding, delete the ETH OAM information from the first packet, and add an MPLS OAM information, where the OAM information of the first node device 800 is the ETH OAM information.

Optionally, in an embodiment of the present invention, the network transmission control system further includes a third node device, the third node device is a previous-hop node device of the first node device 800, the first packet is a packet that is from the source node device and that is forwarded by the third node device, the third node device is a Multiprotocol Label Switching provider edge MPLS PE device, and the first node device 800 is an Ethernet switch ETH switch.

The first node device 800 determines that a forwarding manner of the third node device is layer 2 forwarding, the first packet further carries OAM information of the MPLS PE device, the OAM information of the MPLS PE device includes ETH OAM information and MPLS OAM information, the ETH OAM information includes an ETH OAM command, the ETH OAM command is the same as the IP OAM command, the MPLS OAM information includes an MPLS OAM command, and the MPLS OAM command is the same as the IP OAM command.

The generation unit 820 is specifically configured to delete the MPLS OAM information from the first packet.

Optionally, in an embodiment of the present invention, the network transmission control system further includes a third node device, the third node device is a previous-hop node device of the first node device 800, the first packet is a packet that is from the source node device and that is forwarded by the third node device, the third node device is a Multiprotocol Label Switching provider edge MPLS PE device, and the first node device 800 is an Ethernet switch ETH switch.

The first node device 800 determines that a forwarding manner of the MPLS PE device is layer 3 forwarding, the first packet further carries OAM information of the MPLS PE device, the OAM information of the MPLS PE device includes MPLS OAM information, the MPLS OAM information includes an MPLS OAM command, and the MPLS OAM command is the same as the IP OAM command.

The generation unit 820 is specifically configured to: delete the MPLS OAM information from the first packet, and add the OAM information of the ETH switch, where the OAM information of the ETH switch is ETH OAM information.

Optionally, in an embodiment of the present invention, the sending unit 830 is further configured to send a response packet to the source node device, where the response packet includes an OAM result corresponding to the OAM command of the first node device 800 in the second packet.

Optionally, in an embodiment of the present invention, the sending unit 830 is further configured to send a response packet to an OAM controller, where the response packet includes an OAM result corresponding to the OAM command of the first node device 800 in the second packet.

It can be learned that in the solution provided in this embodiment, the first packet sent by the source node device carries the IP OAM information, so that the first node device 800 through which the first packet passes can identify the first packet, determine the OAM command in the OAM information of the first node device 800 based on the IP OAM command in the OAM information, and then, add the OAM information of the first node device 800 to the first packet to generate the second packet. Therefore, the first node device 800 on a path through which the first packet passes returns corresponding OAM result information to the source node device or the OAM controller based on the OAM information, so that OAM information of all node devices on an E2E path is automatically collected, OAM efficiency is improved, and further, control over network transmission stability is improved.

In this embodiment, the first node device 800 may be presented in a form of a unit. The "unit" herein may be an application-specific integrated circuit (ASIC), a processor executing one or more software or firmware programs and a memory, an integrated logic circuit, and/or another component capable of providing the foregoing functions.

It may be understood that functions of the functional units of the first node device 800 in this embodiment may be specifically implemented based on the method in the foregoing method embodiment. For a specific implementation process, refer to the related description in the method embodiment, and details are not described herein again.

FIG. 9 is a schematic structural diagram of another first node device according to an embodiment of the present invention. As shown in FIG. 9, the first node device 900 includes:
a transmitter/receiver 901 and a processor 902. The processor 902 may be a controller, and represented as "a controller/processor 902" in FIG. 9. The transmitter/receiver 901 is configured to: support information receiving and transmission between the first node device 900 (which may be specifically a PGW or an edge node) and the first node device 900 and another device in the foregoing embodiment, and support radio communication between the first node device 900 and another device. The processor 902 executes various functions of communicating with the first node device 900. On an uplink, an uplink signal from another device is received by an antenna, demodulated by the receiver 901 (for example, a high-frequency signal is demodulated into a baseband signal), and further processed by the processor 902, to restore the signal to service data and signaling information sent by the first node device 900. On a downlink, service data and a signaling message are processed by the processor 902, and modulated by the transmitter 901 (for example, a baseband signal is modulated into a high-frequency signal) to generate a downlink signal, and the downlink signal is transmitted to another device by using an antenna. It should be noted that functions of demodulation or modulation may be alternatively implemented by the processor 902. For example, the processor 902 is further configured to perform corresponding steps in the method embodiment, and/or other processes in the technical solutions described in the embodiments of the present invention.

Further, the first node device 900 may further include a memory 903, and the memory 903 is configured to store program code and data of the first node device 900. In addition, the first node device 900 may further include a communications unit 904. The communications unit 904 is configured to support communication between the first node device and a terminal. For example, in an LTE system, the communications unit 904 may be alternatively an S1-MME interface, configured to support communication between the first node device and a mobility management entity (MME).

It may be understood that FIG. 9 shows only a simplified design of the first node device 900. In an actual application, the first node device 900 may include any quantities of transmitters, receivers, processors, controllers, memories, communications units, and the like. All first node devices capable of implementing the embodiments of the present invention fall within the protection scope of the embodiments of the present invention.

An embodiment of the present invention further provides a computer storage medium. The computer storage medium may store a program, and some or all steps in any network transmission control method recorded in the method embodiment are performed when the program is executed.

In the several embodiments provided in this application, it should be understood
that the disclosed apparatus may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, a network device, or the like) to perform all or some of the steps of the methods described in the embodiments of the present invention. The foregoing storage medium includes: any medium that can store program code, such as a USB flash drive, a read-only memory (ROM), a random access memory (RAM), a removable hard disk, a magnetic disk, or an optical disc.

## Claims

1. A network transmission control method, wherein the method is applied to a network transmission control system, the network transmission control system comprises a source node device, a first node device, and a second node device, and the method comprises:
receiving (S201), by the first node device, a first packet from the source node device, wherein the first packet carries Internet Protocol operation, administration and maintenance, IP OAM, information, and the IP OAM information comprises an IP OAM command;
generating (S202), by the first node device, a second packet based on the first packet, wherein the second packet carries the IP OAM information of the first packet and operation, administration and maintenance, OAM, information of the first node device, the OAM information of the first node device comprises an OAM command of the first node device, and the OAM command of the first node device is the same as the IP OAM command; and
sending (S203), by the first node device, the second packet to the second node device, wherein the second node device is a next-hop node device of the first node device;
**characterized in that** before the sending (S203), by the first node device, the second packet to the second node device, the method further comprises:
receiving (S204), by the first node device, a notification message from the second node device, wherein the notification message is used to indicate a forwarding type used by the second node device; and
determining (S205), by the first node device, that the forwarding type used by the second node device is different from a forwarding type of the first node device, and generating OAM information of the second node device, wherein the OAM information of the second node device comprises an OAM command of the second node device, wherein
the second packet further comprises the OAM information of the second node device, and the OAM command of the second node device is the same as the IP OAM command.

2. The method according to claim 1, wherein the network transmission control system further comprises a third node device, the third node device is a previous-hop node device of the first node device, the first packet is a packet that is from the source node device and that is forwarded by the third node device, the third node device is a layer 2 node device, and the first node device is a layer 3 node device;
the first packet further carries OAM information of the third node device, the OAM information of the third node device comprises an OAM command, and the OAM command of the third node device is the same as the IP OAM command; and
in the generating (S202), by the first node device, a second packet based on the first packet, the method further comprises:
determining, by the first node device, that a forwarding manner of the first node device is layer 2 forwarding, and adding, by the first node device, layer 3 OAM information of the first node device to the first packet to generate the second packet, wherein the layer 3 OAM information comprises a layer 3 OAM command, the layer 3 OAM command is the same as the IP OAM command, and the OAM information of the first node device comprises the layer 3 OAM information of the first node device; or
determining, by the first node device, that a forwarding manner of the first node device is layer 3 forwarding, deleting, by the first node device, the OAM information of the third node device from the first packet, and adding the OAM information of the first node device, wherein the OAM information of the first node device is layer 3 OAM information.

3. The method according to claim 1, wherein the network transmission control system further comprises a third node device, the third node device is a previous-hop node device of the first node device, the first packet is a packet that is from the source node device and that is forwarded by the third node device, the third node device is a layer 3 node device, and the first node device is a layer 2 node device;
the first node device determines that a forwarding manner of the third node device is layer 2 forwarding, the first packet further carries OAM information of the third node device, the OAM information of the third node device comprises layer 2 OAM information of the third node device and layer 3 OAM information of the third node device, the layer 2 OAM information comprises a layer 2 OAM command, the layer 2 OAM command is the same as the IP OAM command, the layer 3 OAM information comprises a layer 3 OAM command, and the layer 3 OAM command is the same as the IP OAM command; and
in the generating (S202), by the first node device, a second packet based on the first packet, the method further comprises:
deleting, by the first node device, the layer 3 OAM information of the third node device from the first packet.

4. The method according to claim 1, wherein the network transmission control system further comprises a third node device, the third node device is a previous-hop node device of the first node device, the first packet is a packet that is from the source node device and that is forwarded by the third node device, the third node device is a layer 3 node device, and the first node device is a layer 2 node device;
the first node device determines that a forwarding manner of the third node device is layer 3 forwarding, the first packet further carries OAM information of the third node device, the OAM information of the third node device comprises layer 3 OAM information of the third node device, the layer 3 OAM information comprises a layer 3 OAM command of the third node device, and the layer 3 OAM command is the same as the IP OAM command; and
in the generating (S202), by the first node device, a second packet based on the first packet, the method further comprises:
deleting, by the first node device, the layer 3 OAM information from the first packet, and adding the OAM information of the first node device, wherein the OAM information of the first node device is layer 2 OAM information.

5. The method according to claim 1, wherein the network transmission control system further comprises a third node device, the third node device is a previous-hop node device of the first node device, the first packet is a packet that is from the source node device and that is forwarded by the third node device, the third node device is an Ethernet switch, ETH switch, and the first node device is a Multiprotocol Label Switching provider edge, MPLS PE, device;
the first packet further carries ETH OAM information, the ETH OAM information comprises an ETH OAM command, and the ETH OAM command is the same as the IP OAM command; and
in the generating (S202), by the first node device, a second packet based on the first packet, the method further comprises:
determining, by the first node device, that a forwarding manner of the first node device is layer 2 forwarding, and adding, by the first node device, MPLS OAM information to the first packet to generate the second packet, wherein the MPLS OAM information comprises an MPLS OAM command, the MPLS OAM command is the same as the IP OAM command, and the MPLS OAM information is the OAM information of the first node device; or
determining, by the first node device, that a forwarding manner of the first node device is layer 3 forwarding, deleting, by the first node device, the ETH OAM information from the first packet, and adding an MPLS OAM information, wherein the OAM information of the first node device is the ETH OAM information.

6. The method according to claim 1, wherein the network transmission control system further comprises a third node device, the third node device is a previous-hop node device of the first node device, the first packet is a packet that is from the source node device and that is forwarded by the third node device, the third node device is a Multiprotocol Label Switching provider edge, MPLS PE, device, and the first node device is an Ethernet switch, ETH switch;
the first node device determines that a forwarding manner of the third node device is layer 2 forwarding, the first packet further carries OAM information of the MPLS PE device, the OAM information of the MPLS PE device comprises ETH OAM information and MPLS OAM information, the ETH OAM information comprises an ETH OAM command, the ETH OAM command is the same as the IP OAM command, the MPLS OAM information comprises an MPLS OAM command, and the MPLS OAM command is the same as the IP OAM command; and
in the generating (S202), by the first node device, a second packet based on the first packet, the method further comprises:
deleting, by the first node device, the MPLS OAM information from the first packet.

7. The method according to claim 1, wherein the network transmission control system further comprises a third node device, the third node device is a previous-hop node device of the first node device, the first packet is a packet that is from the source node device and that is forwarded by the third node device, the third node device is a Multiprotocol Label Switching provider edge, MPLS PE, device, and the first node device is an Ethernet switch, ETH switch;
the first node device determines that a forwarding manner of the MPLS PE device is layer 3 forwarding, the first packet further carries OAM information of the MPLS PE device, the OAM information of the MPLS PE device comprises MPLS OAM information, the MPLS OAM information comprises an MPLS OAM command, and the MPLS OAM command is the same as the IP OAM command; and
in the generating (S202), by the first node device, a second packet based on the first packet, the method further comprises:
deleting, by the first node device, the MPLS OAM information from the first packet, and adding the OAM information of the ETH switch, wherein the OAM information of the ETH switch is ETH OAM information.

8. The method according to any one of claims 1 to 7, wherein after the generating (S202), by the first node device, a second packet based on the first packet, the method further comprises:
sending (S206), by the first node device, a response packet to the source node device, wherein the response packet comprises an OAM result corresponding to the OAM command of the first node device in the second packet.

9. The method according to any one of claims 1 to 7, wherein after the generating (S202), by the first node device, a second packet based on the first packet, the method further comprises:
sending, by the first node device, a response packet to an OAM controller, wherein the response packet comprises an OAM result corresponding to the OAM command of the first node device in the second packet.

10. A first node device, wherein the first node device belongs to a network transmission control system, the network transmission control system further comprises a source node device and a second node device, and the first node device comprises:
a receiving unit (810), configured to receive a first packet from the source node device, wherein the first packet carries Internet Protocol operation, administration and maintenance, IP OAM, information, and the IP OAM information comprises an IP OAM command;
a generation unit (820), configured to generate a second packet based on the first packet, wherein the second packet carries the IP OAM information of the first packet and operation, administration and maintenance OAM information of the first node device, the OAM information of the first node device comprises an OAM command of the first node device, and the OAM command of the first node device is the same as the IP OAM command; and
a sending unit (830), configured to send the second packet to the second node device, wherein the second node device is a next-hop node device of the first node device;
**characterized in that** the receiving unit (810) is further configured to receive a notification message from the second node device, wherein the notification message is used to indicate a forwarding type used by the second node device; and
the generation unit (820) is further configured to: determine that the forwarding type used by the second node device is different from a forwarding type of the first node device, and generate OAM information of the second node device, wherein the OAM information of the second node device comprises an OAM command of the second node device, wherein
the second packet further comprises the OAM information of the second node device, and the OAM command of the second node device is the same as the IP OAM command.

11. The first node device according to claim 10, wherein the network transmission control system further comprises a third node device, the third node device is a previous-hop node device of the first node device, the first packet is a packet that is from the source node device and that is forwarded by the third node device, the third node device is a layer 2 node device, and the first node device is a layer 3 node device;
the first packet further carries OAM information of the third node device, the OAM information of the third node device comprises an OAM command, and the OAM command of the third node device is the same as the IP OAM command; and
the generation unit (820) is specifically configured to: determine that a forwarding manner of the first node device is layer 2 forwarding, and add layer 3 OAM information of the first node device to the first packet to generate the second packet, wherein the layer 3 OAM information comprises a layer 3 OAM command, the layer 3 OAM command is the same as the IP OAM command, and the OAM information of the first node device comprises the layer 3 OAM information of the first node device; or
determine that a forwarding manner of the first node device is layer 3 forwarding, delete the OAM information of the third node device from the first packet, and add the OAM information of the first node device, wherein the OAM information of the first node device is layer 3 OAM information.

12. The first node device according to claim 10, wherein the network transmission control system further comprises a third node device, the third node device is a previous-hop node device of the first node device, the first packet is a packet that is from the source node device and that is forwarded by the third node device, the third node device is a layer 3 node device, and the first node device is a layer 2 node device;
the first node device determines that a forwarding manner of the third node device is layer 2 forwarding, the first packet further carries OAM information of the third node device, the OAM information of the third node device comprises layer 2 OAM information of the third node device and layer 3 OAM information of the third node device, the layer 2 OAM information comprises a layer 2 OAM command, the layer 2 OAM command is the same as the IP OAM command, the layer 3 OAM information comprises a layer 3 OAM command, and the layer 3 OAM command is the same as the IP OAM command; and
the generation unit (820) is specifically configured to delete the layer 3 OAM information of the third node device from the first packet.

13. The first node device according to claim 10, wherein the network transmission control system further comprises a third node device, the third node device is a previous-hop node device of the first node device, the first packet is a packet that is from the source node device and that is forwarded by the third node device, the third node device is a layer 3 node device, and the first node device is a layer 2 node device;
the first node device determines that a forwarding manner of the third node device is layer 3 forwarding, the first packet further carries OAM information of the third node device, the OAM information of the third node device comprises layer 3 OAM information of the third node device, the layer 3 OAM information comprises a layer 3 OAM command of the third node device, and the layer 3 OAM command is the same as the IP OAM command; and
the generation unit (820) is specifically configured to: delete the layer 3 OAM information from the first packet, and add the OAM information of the first node device, wherein the OAM information of the first node device is layer 2 OAM information.

## Patentansprüche

1. Netzwerkübertragungssteuerverfahren, wobei das Verfahren auf ein Netzwerkübertragungssteuersystem angewendet wird, das Netzwerkübertragungssteuersystem eine Quellknotenvorrichtung, eine erste Knotenvorrichtung und eine zweite Knotenvorrichtung umfasst und das Verfahren Folgendes umfasst:
Empfangen (S201) eines ersten Pakets von der Quellknotenvorrichtung durch die erste Knotenvorrichtung, wobei das erste Paket Internetprotokollbetriebs-, -verwaltungs- und -wartungs(Internet *Protocol Operation, Administration and Maintenance* - IP OAM)informationen trägt und die IP-OAM-Informationen einen IP-OAM-Befehl umfassen;
Erzeugen (S202) eines zweiten Pakets durch die erste Knotenvorrichtung auf Basis des ersten Pakets, wobei das zweite Paket die IP-OAM-Informationen des ersten Pakets und Betriebs-, Verwaltungs- und Wartungs(OAM)informationen der ersten Knotenvorrichtung trägt, die OAM-Informationen der ersten Knotenvorrichtung einen OAM-Befehl der ersten Knotenvorrichtung umfassen und der OAM-Befehl der ersten Knotenvorrichtung der gleiche wie der IP-OAM-Befehl ist; und
Senden (S203) des zweiten Pakets an die zweite Knotenvorrichtung durch die erste Knotenvorrichtung, wobei die zweite Knotenvorrichtung eine Next-Hop-Knotenvorrichtung der ersten Knotenvorrichtung ist;
**dadurch gekennzeichnet, dass** vor dem Senden (S203) des zweiten Pakets an die zweite Knotenvorrichtung durch die erste Knotenvorrichtung das Verfahren ferner Folgendes umfasst:
Empfangen (S204) einer Benachrichtigungsnachricht von der zweiten Knotenvorrichtung durch die erste Knotenvorrichtung, wobei die Benachrichtigungsnachricht verwendet wird, um eine durch die zweite Knotenvorrichtung verwendete Weiterleitungsart anzuzeigen; und
Bestimmen (S205), durch die erste Knotenvorrichtung, dass sich die durch die zweite Knotenvorrichtung verwendete Weiterleitungsart von einer Weiterleitungsart der ersten Knotenvorrichtung unterscheidet, und Erzeugen von OAM-Informationen der zweiten Knotenvorrichtung, wobei die OAM-Informationen der zweiten Knotenvorrichtung einen OAM-Befehl der zweiten Knotenvorrichtung umfassen, wobei
das zweite Paket ferner die OAM-Informationen der zweiten Knotenvorrichtung umfasst und der OAM-Befehl der zweiten Knotenvorrichtung der gleiche wie der IP-OAM-Befehl ist.

2. Verfahren nach Anspruch 1, wobei das Netzwerkübertragungssteuersystem ferner eine dritte Knotenvorrichtung umfasst, die dritte Knotenvorrichtung eine Previous-Hop-Knotenvorrichtung der ersten Knotenvorrichtung ist, das erste Paket ein Paket ist, das von der Quellknotenvorrichtung stammt und das durch die dritte Knotenvorrichtung weitergeleitet wird, die dritte Knotenvorrichtung eine Schicht-2-Knotenvorrichtung ist und die erste Knotenvorrichtung eine Schicht-3-Knotenvorrichtung ist;
das erste Paket ferner OAM-Informationen der dritten Knotenvorrichtung trägt, die OAM-Informationen der dritten Knotenvorrichtung einen OAM-Befehl umfassen und der OAM-Befehl der dritten Knotenvorrichtung der gleiche wie der IP-OAM-Befehl ist; und
beim Erzeugen (S202) eines zweiten Pakets durch die erste Knotenvorrichtung auf Basis des ersten Pakets, das Verfahren ferner Folgendes umfasst:
Bestimmen, durch die erste Knotenvorrichtung, dass es sich bei einer Weiterleitungsart der ersten Knotenvorrichtung um Schicht-2-Weiterleitung handelt, und Hinzufügen von Schicht-3-OAM-Informationen der ersten Knotenvorrichtung zu dem ersten Paket durch die erste Knotenvorrichtung, um das zweite Paket zu erzeugen, wobei die Schicht-3-OAM-Informationen einen Schicht-3-OAM-Befehl umfassen, der Schicht-3-OAM-Befehl der gleiche wie der IP-OAM-Befehl ist und die OAM-Informationen der ersten Knotenvorrichtung die Schicht-3-OAM-Informationen der ersten Knotenvorrichtung umfassen;
oder
Bestimmen, durch die erste Knotenvorrichtung, dass es sich bei einer Weiterleitungsart der ersten Knotenvorrichtung um Schicht-3-Weiterleitung handelt, Löschen der OAM-Informationen der dritten Knotenvorrichtung aus dem ersten Paket durch die erste Knotenvorrichtung, und Hinzufügen der OAM-Informationen der ersten Knotenvorrichtung, wobei die OAM-Informationen der ersten Knotenvorrichtung Schicht-3-OAM-Informationen sind.

3. Verfahren nach Anspruch 1, wobei das Netzwerkübertragungssteuersystem ferner eine dritte Knotenvorrichtung umfasst, die dritte Knotenvorrichtung eine Previous-Hop-Knotenvorrichtung der ersten Knotenvorrichtung ist, das erste Paket ein Paket ist, das von der Quellknotenvorrichtung stammt und das durch die dritte Knotenvorrichtung weitergeleitet wird, die dritte Knotenvorrichtung eine Schicht-3-Knotenvorrichtung ist und die erste Knotenvorrichtung eine Schicht-2-Knotenvorrichtung ist;
die erste Knotenvorrichtung bestimmt, dass es sich bei einer Weiterleitungsart der dritten Knotenvorrichtung um Schicht-2-Weiterleitung handelt, das erste Paket ferner OAM-Informationen der dritten Knotenvorrichtung trägt, die OAM-Informationen der dritten Knotenvorrichtung Schicht-2-OAM-Informationen der dritten Knotenvorrichtung und Schicht-3-OAM-Informationen der dritten Knotenvorrichtung umfassen, die Schicht-2-OAM-Informationen einen Schicht-2-OAM-Befehl umfassen, der Schicht-2-OAM-Befehl der gleiche wie der IP-OAM-Befehl ist, die Schicht-3-OAM-Informationen einen Schicht-3-OAM-Befehl umfassen und der Schicht-3-OAM-Befehl der gleiche wie der IP-OAM-Befehl ist; und
beim Erzeugen (S202) eines zweiten Pakets durch die erste Knotenvorrichtung auf Basis des ersten Pakets, das Verfahren ferner Folgendes umfasst:
Löschen der Schicht-3-OAM-Informationen der dritten Knotenvorrichtung aus dem ersten Paket durch die erste Knotenvorrichtung.

4. Verfahren nach Anspruch 1, wobei das Netzwerkübertragungssteuersystem ferner eine dritte Knotenvorrichtung umfasst, die dritte Knotenvorrichtung eine Previous-Hop-Knotenvorrichtung der ersten Knotenvorrichtung ist, das erste Paket ein Paket ist, das von der Quellknotenvorrichtung stammt und das durch die dritte Knotenvorrichtung weitergeleitet wird, die dritte Knotenvorrichtung eine Schicht-3-Knotenvorrichtung ist und die erste Knotenvorrichtung eine Schicht-2-Knotenvorrichtung ist;
die erste Knotenvorrichtung bestimmt, dass es sich bei einer Weiterleitungsart der dritten Knotenvorrichtung um Schicht-3-Weiterleitung handelt, das erste Paket ferner OAM-Informationen der dritten Knotenvorrichtung trägt, die OAM-Informationen der dritten Knotenvorrichtung Schicht-3-OAM-Informationen der dritten Knotenvorrichtung umfassen, die Schicht-3-OAM-Informationen einen Schicht-3-OAM-Befehl der dritten Knotenvorrichtung umfassen und der Schicht-3-OAM-Befehl der gleiche wie der IP-OAM-Befehl ist; und
beim Erzeugen (S202) eines zweiten Pakets durch die erste Knotenvorrichtung auf Basis des ersten Pakets, das Verfahren ferner Folgendes umfasst:
Löschen der Schicht-3-OAM-Informationen aus dem ersten Paket durch die erste Knotenvorrichtung und Hinzufügen der OAM-Informationen der ersten Knotenvorrichtung, wobei die OAM-Informationen der ersten Knotenvorrichtung Schicht-2-OAM-Informationen sind.

5. Verfahren nach Anspruch 1, wobei das Netzwerkübertragungssteuersystem ferner eine dritte Knotenvorrichtung umfasst, die dritte Knotenvorrichtung eine Previous-Hop-Knotenvorrichtung der ersten Knotenvorrichtung ist, das erste Paket ein Paket ist, das von der Quellknotenvorrichtung stammt und das durch die dritte Knotenvorrichtung weitergeleitet wird, die dritte Knotenvorrichtung ein Ethernet-Switch (ETH-Switch) ist und die erste Knotenvorrichtung eine Multiprotocol Label Switching Provider Edge(MPLS-PE)-Vorrichtung ist;
das erste Paket ferner ETH-OAM-Informationen trägt, die ETH-OAM-Informationen einen ETH-OAM-Befehl umfassen und der ETH-OAM-Befehl der gleiche wie der IP-OAM-Befehl ist; und
beim Erzeugen (S202) eines zweiten Pakets durch die erste Knotenvorrichtung auf Basis des ersten Pakets, das Verfahren ferner Folgendes umfasst:
Bestimmen, durch die erste Knotenvorrichtung, dass es sich bei einer Weiterleitungsart der ersten Knotenvorrichtung um Schicht-2-Weiterleitung handelt, und Hinzufügen von MPLS-OAM-Informationen zu dem ersten Paket durch die erste Knotenvorrichtung, um das zweite Paket zu erzeugen, wobei die MPLS-OAM-Informationen einen MPLS-OAM-Befehl umfassen, der MPLS-OAM-Befehl der gleich wie der IP-OAM-Befehl ist und die MPLS-OAM-Informationen die OAM-Informationen der ersten Knotenvorrichtung sind; oder
Bestimmen, durch die erste Knotenvorrichtung, dass es sich bei einer Weiterleitungsart der ersten Knotenvorrichtung um Schicht-3-Weiterleitung handelt, Löschen der ETH-OAM-Informationen aus dem ersten Paket durch die erste Knotenvorrichtung, und Hinzufügen von MPLS-OAM-Informationen, wobei die OAM-Informationen der ersten Knotenvorrichtung die ETH-OAM-Informationen sind.

6. Verfahren nach Anspruch 1, wobei das Netzwerkübertragungssteuersystem ferner eine dritte Knotenvorrichtung umfasst, die dritte Knotenvorrichtung eine Previous-Hop-Knotenvorrichtung der ersten Knotenvorrichtung ist, das erste Paket ein Paket ist, das von der Quellknotenvorrichtung stammt und das durch die dritte Knotenvorrichtung weitergeleitet wird, die dritte Knotenvorrichtung eine Multiprotocol Label Switching Provider Edge(MPLS-PE)-Vorrichtung ist und die erste Knotenvorrichtung ein Ethernet-Switch (ETH-Switch) ist;
die erste Knotenvorrichtung bestimmt, dass es sich bei einer Weiterleitungsart der dritten Knotenvorrichtung um Schicht-2-Weiterleitung handelt, das erste Paket ferner OAM-Informationen der MPLS-PE-Vorrichtung trägt, die OAM-Informationen der MPLS-PE-Vorrichtung ETH-OAM-Informationen und MPLS-OAM-Informationen umfassen, die ETH-OAM-Informationen einen ETH-OAM-Befehl umfassen, der ETH-OAM-Befehl der gleiche wie der IP-OAM-Befehl ist, die MPLS-OAM-Informationen einen MPLS-OAM-Befehl umfassen und der MPLS-OAM-Befehl der gleiche wie der IP-OAM-Befehl ist; und
beim Erzeugen (S202) eines zweiten Pakets durch die erste Knotenvorrichtung auf Basis des ersten Pakets, das Verfahren ferner Folgendes umfasst:
Löschen der MPLS-OAM-Informationen aus dem ersten Paket durch die erste Knotenvorrichtung.

7. Verfahren nach Anspruch 1, wobei das Netzwerkübertragungssteuersystem ferner eine dritte Knotenvorrichtung umfasst, die dritte Knotenvorrichtung eine Previous-Hop-Knotenvorrichtung der ersten Knotenvorrichtung ist, das erste Paket ein Paket ist, das von der Quellknotenvorrichtung stammt und das durch die dritte Knotenvorrichtung weitergeleitet wird, die dritte Knotenvorrichtung eine Multiprotocol Label Switching Provider Edge(MPLS-PE)-Vorrichtung ist und die erste Knotenvorrichtung ein Ethernet-Switch (ETH-Switch) ist;
die erste Knotenvorrichtung bestimmt, dass es sich bei einer Weiterleitungsart der MPLS-PE-Vorrichtung um Schicht-3-Weiterleitung handelt, das erste Paket ferner OAM-Informationen der MPLS-PE-Vorrichtung trägt, die OAM-Informationen der MPLS-PE-Vorrichtung MPLS-OAM-Informationen umfassen, die MPLS-OAM-Informationen einen MPLS-OAM-Befehl umfassen und der MPLS-OAM-Befehl der gleiche wie der IP-OAM-Befehl ist; und
beim Erzeugen (S202) eines zweiten Pakets durch die erste Knotenvorrichtung auf Basis des ersten Pakets, das Verfahren ferner Folgendes umfasst:
Löschen der MPLS-OAM-Informationen aus dem ersten Paket durch die erste Knotenvorrichtung und Hinzufügen der OAM-Informationen des ETH-Switches, wobei die OAM-Informationen des ETH-Switches ETH-OAM-Informationen sind.

8. Verfahren nach einem der Ansprüche 1 bis 7, wobei nach dem Erzeugen (S202) eines zweiten Pakets durch die erste Knotenvorrichtung auf Basis des ersten Pakets, das Verfahren ferner Folgendes umfasst:
Senden (S206) eines Antwortpakets an die Quellknotenvorrichtung durch die erste Knotenvorrichtung, wobei das Antwortpaket ein OAM-Ergebnis umfasst, das dem OAM-Befehl der ersten Knotenvorrichtung in dem zweiten Paket entspricht.

9. Verfahren nach einem der Ansprüche 1 bis 7, wobei nach dem Erzeugen (S202) eines zweiten Pakets durch die erste Knotenvorrichtung auf Basis des ersten Pakets, das Verfahren ferner Folgendes umfasst:
Senden eines Antwortpakets an eine OAM-Steuereinheit durch die erste Knotenvorrichtung, wobei das Antwortpaket ein OAM-Ergebnis umfasst, das dem OAM-Befehl der ersten Knotenvorrichtung in dem zweiten Paket entspricht.

10. Erste Knotenvorrichtung, wobei die erste Knotenvorrichtung zu einem Netzwerkübertragungssteuersystem gehört, das Netzwerkübertragungssteuersystem ferner eine Quellknotenvorrichtung und eine zweite Knotenvorrichtung umfasst und die erste Knotenvorrichtung Folgendes umfasst:
eine Empfangseinheit (810), die dazu konfiguriert ist, ein erstes Paket von der Quellknotenvorrichtung zu empfangen, wobei das erste Paket Internetprotokollbetriebs, - verwaltungs- und -wartungs(IP-OAM)informationen trägt und die IP-OAM-Informationen einen IP-OAM-Befehl umfassen;
eine Erzeugungseinheit (820), die dazu konfiguriert ist, ein zweites Paket auf Basis des ersten Pakets zu erzeugen, wobei das zweite Paket die IP-OAM-Informationen des ersten Pakets und Betriebs-, Verwaltungs- und Wartungs(OAM)informationen der ersten Knotenvorrichtung trägt, die OAM-Informationen der ersten Knotenvorrichtung einen OAM-Befehl der ersten Knotenvorrichtung umfassen und der OAM-Befehl der ersten Knotenvorrichtung der gleiche wie der IP-OAM-Befehl ist; und
eine Sendeeinheit (830), die dazu konfiguriert ist, das zweite Paket an die zweite Knotenvorrichtung zu senden, wobei die zweite Knotenvorrichtung eine Next-Hop-Knotenvorrichtung der ersten Knotenvorrichtung ist;
**dadurch gekennzeichnet, dass** die Empfangseinheit (810) ferner dazu konfiguriert ist, eine Benachrichtigungsnachricht von der zweiten Knotenvorrichtung zu empfangen, wobei die Benachrichtigungsnachricht verwendet wird, um eine durch die zweite Knotenvorrichtung verwendete Weiterleitungsart anzuzeigen; und
die Erzeugungseinheit (820) ferner für Folgendes konfiguriert ist: Bestimmen, dass sich die durch die zweite Knotenvorrichtung verwendete Weiterleitungsart von einer Weiterleitungsart der ersten Knotenvorrichtung unterscheidet, und Erzeugen von OAM-Informationen der zweiten Knotenvorrichtung, wobei die OAM-Informationen der zweiten Knotenvorrichtung einen OAM-Befehl der zweiten Knotenvorrichtung umfassen, wobei
das zweite Paket ferner die OAM-Informationen der zweiten Knotenvorrichtung umfasst und der OAM-Befehl der zweiten Knotenvorrichtung der gleiche wie der IP-OAM-Befehl ist.

11. Erste Knotenvorrichtung nach Anspruch 10, wobei das
Netzwerkübertragungssteuersystem ferner eine dritte Knotenvorrichtung umfasst, die dritte Knotenvorrichtung eine Previous-Hop-Knotenvorrichtung der ersten Knotenvorrichtung ist, das erste Paket ein Paket ist, das von der Quellknotenvorrichtung stammt und das durch die dritte Knotenvorrichtung weitergeleitet wird, die dritte Knotenvorrichtung eine Schicht-2-Knotenvorrichtung ist und die erste Knotenvorrichtung eine Schicht-3-Knotenvorrichtung ist;
das erste Paket ferner OAM-Informationen der dritten Knotenvorrichtung trägt, die OAM-Informationen der dritten Knotenvorrichtung einen OAM-Befehl umfassen und der OAM-Befehl der dritten Knotenvorrichtung der gleiche wie der IP-OAM-Befehl ist; und
die erste Erzeugungseinheit (820) speziell für Folgendes konfiguriert ist: Bestimmen, dass es sich bei einer Weiterleitungsart der ersten Knotenvorrichtung um Schicht-2-Weiterleitung handelt, und Hinzufügen von Schicht-3-OAM-Informationen der ersten Knotenvorrichtung zu dem ersten Paket, um das zweite Paket zu erzeugen, wobei die Schicht-3-OAM-Informationen einen Schicht-3-OAM-Befehl umfassen, der Schicht-3-OAM-Befehl der gleich wie der IP-OAM-Befehl ist und die OAM-Informationen der ersten Knotenvorrichtung die Schicht-3-OAM-Informationen der ersten Knotenvorrichtung umfassen; oder
Bestimmen, dass es sich bei einer Weiterleitungsart der ersten Knotenvorrichtung um Schicht-3-Weiterleitung handelt, Löschen der OAM-Informationen der dritten Knotenvorrichtung aus dem ersten Paket, und Hinzufügen der OAM-Informationen der ersten Knotenvorrichtung, wobei die OAM-Informationen der ersten Knotenvorrichtung Schicht-3-OAM-Informationen sind.

12. Erste Knotenvorrichtung nach Anspruch 10, wobei das
Netzwerkübertragungssteuersystem ferner eine dritte Knotenvorrichtung umfasst, die dritte Knotenvorrichtung eine Previous-Hop-Knotenvorrichtung der ersten Knotenvorrichtung ist, das erste Paket ein Paket ist, das von der Quellknotenvorrichtung stammt und das durch die dritte Knotenvorrichtung weitergeleitet wird, die dritte Knotenvorrichtung eine Schicht-3-Knotenvorrichtung ist und die erste Knotenvorrichtung eine Schicht-2-Knotenvorrichtung ist;
die erste Knotenvorrichtung bestimmt, dass es sich bei einer Weiterleitungsart der dritten Knotenvorrichtung um Schicht-2-Weiterleitung handelt, das erste Paket ferner OAM-Informationen der dritten Knotenvorrichtung trägt, die OAM-Informationen der dritten Knotenvorrichtung Schicht-2-OAM-Informationen der dritten Knotenvorrichtung und Schicht-3-OAM-Informationen der dritten Knotenvorrichtung umfassen, die Schicht-2-OAM-Informationen einen Schicht-2-OAM-Befehl umfassen, der Schicht-2-OAM-Befehl der gleiche wie der IP-OAM-Befehl ist, die Schicht-3-OAM-Informationen einen Schicht-3-OAM-Befehl umfassen und der Schicht-3-OAM-Befehl der gleiche wie der IP-OAM-Befehl ist; und
die Erzeugungseinheit (820) speziell dazu konfiguriert ist, die Schicht-3-OAM-Informationen der dritten Knotenvorrichtung aus dem ersten Paket zu löschen.

13. Erste Knotenvorrichtung nach Anspruch 10, wobei das
Netzwerkübertragungssteuersystem ferner eine dritte Knotenvorrichtung umfasst, die dritte Knotenvorrichtung eine Previous-Hop-Knotenvorrichtung der ersten Knotenvorrichtung ist, das erste Paket ein Paket ist, das von der Quellknotenvorrichtung stammt und das durch die dritte Knotenvorrichtung weitergeleitet wird, die dritte Knotenvorrichtung eine Schicht-3-Knotenvorrichtung ist und die erste Knotenvorrichtung eine Schicht-2-Knotenvorrichtung ist;
die erste Knotenvorrichtung bestimmt, dass es sich bei einer Weiterleitungsart der dritten Knotenvorrichtung um Schicht-3-Weiterleitung handelt, das erste Paket ferner OAM-Informationen der dritten Knotenvorrichtung trägt, die OAM-Informationen der dritten Knotenvorrichtung Schicht-3-OAM-Informationen der dritten Knotenvorrichtung umfassen, die Schicht-3-OAM-Informationen einen Schicht-3-OAM-Befehl der dritten Knotenvorrichtung umfassen und der Schicht-3-OAM-Befehl der gleiche wie der IP-OAM-Befehl ist; und
die erste Erzeugungseinheit (820) speziell für Folgendes konfiguriert ist: Löschen der Schicht-3-OAM-Informationen aus dem ersten Paket, und Hinzufügen der OAM-Informationen der ersten Knotenvorrichtung, wobei die OAM-Informationen der ersten Knotenvorrichtung Schicht-2-OAM-Informationen sind.

## Revendications

1. Procédé de commande de transmission de réseau, dans lequel le procédé est appliqué à un système de commande de transmission de réseau, le système de commande de transmission de réseau comprend un dispositif nœud source, un premier dispositif nœud et un deuxième dispositif nœud, et le procédé comprend :
la réception (S201), par le premier dispositif nœud, d'un premier paquet du dispositif nœud source, le premier paquet transportant des informations d'opération, d'administration et de maintenance du protocole Internet, OAM IP, et les informations OAM IP comprenant une instruction OAM IP ;
la génération (S202), par le premier dispositif nœud, d'un second paquet sur la base du premier paquet, le second paquet transportant les informations OAM IP du premier paquet et des informations d'opération, d'administration et de maintenance, OAM, du premier dispositif nœud, les informations OAM du premier dispositif nœud comprenant une instruction OAM du premier dispositif nœud, et l'instruction OAM du premier dispositif nœud étant la même que l'instruction OAM IP ; et
l'envoi (S203), par le premier dispositif nœud, du second paquet au deuxième dispositif nœud, le deuxième dispositif nœud étant un dispositif nœud de saut suivant du premier dispositif nœud ;
**caractérisé en ce qu'**avant l'envoi (S203), par le premier dispositif nœud, du second paquet au deuxième dispositif nœud, le procédé comprend en outre :
la réception (S204), par le premier dispositif nœud, d'un message de notification du deuxième dispositif nœud, le message de notification étant utilisé pour indiquer un type de réacheminement utilisé par le deuxième dispositif nœud ; et
la détermination (S205), par le premier dispositif nœud, du fait que le type de réacheminement utilisé par le deuxième dispositif nœud est différent d'un type de réacheminement du premier dispositif nœud, et la génération d'informations OAM du deuxième dispositif nœud, les informations OAM du deuxième dispositif nœud comprenant une instruction OAM du deuxième dispositif nœud,
le second paquet comprenant en outre les informations OAM du deuxième dispositif nœud, et l'instruction OAM du deuxième dispositif nœud étant la même que l'instruction OAM IP.

2. Procédé selon la revendication 1, dans lequel le système de commande de transmission de réseau comprend en outre un troisième dispositif nœud, le troisième dispositif nœud est un dispositif nœud de saut précédent du premier dispositif nœud, le premier paquet est un paquet qui provient du dispositif nœud source et qui est réacheminé par le troisième dispositif nœud, le troisième dispositif nœud est un dispositif nœud de couche 2, et le premier dispositif nœud est un dispositif nœud de couche 3 ;
le premier paquet transporte en outre des informations OAM du troisième dispositif nœud, les informations OAM du troisième dispositif nœud comprennent une instruction OAM et l'instruction OAM du troisième dispositif nœud est la même que l'instruction OAM IP ; et
lors de la génération (S202), par le premier dispositif nœud, d'un second paquet sur la base du premier paquet, le procédé comprend en outre :
la détermination, par le premier dispositif nœud, du fait qu'un mode de réacheminement du premier dispositif nœud est le réacheminement de couche 2, et l'ajout, par le premier dispositif nœud, d'informations OAM de couche 3 du premier dispositif nœud au premier paquet pour générer le second paquet, les informations OAM de couche 3 comprenant une instruction OAM de couche 3, l'instruction OAM de couche 3 étant la même que l'instruction OAM IP et les informations OAM du premier dispositif nœud comprenant les informations OAM de couche 3 du premier dispositif noeud ; ou
la détermination, par le premier dispositif nœud, du fait qu'un mode de réacheminement du premier dispositif nœud est le réacheminement de couche 3, la suppression, par le premier dispositif nœud, des informations OAM du troisième dispositif nœud du premier paquet, et l'ajout des informations OAM du premier dispositif nœud, les informations OAM du premier dispositif nœud étant des informations OAM de couche 3.

3. Procédé selon la revendication 1, dans lequel le système de commande de transmission de réseau comprend en outre un troisième dispositif nœud, le troisième dispositif nœud est un dispositif nœud de saut précédent du premier dispositif nœud, le premier paquet est un paquet qui provient du dispositif nœud source et qui est réacheminé par le troisième dispositif nœud, le troisième dispositif nœud est un dispositif nœud de couche 3, et le premier dispositif nœud est un dispositif nœud de couche 2 ;
le premier dispositif nœud détermine qu'un mode de réacheminement du troisième dispositif nœud est le réacheminement de couche 2, le premier paquet transporte en outre des informations OAM du troisième dispositif nœud, les informations OAM du troisième dispositif nœud comprennent des informations OAM de couche 2 du troisième dispositif nœud et des informations OAM de couche 3 du troisième dispositif nœud, les informations OAM de couche 2 comprennent une instruction OAM de couche 2, l'instruction OAM de couche 2 est la même que l'instruction OAM IP, les informations OAM de couche 3 comprennent une instruction OAM de couche 3, et l'instruction OAM de couche 3 est la même que l'instruction OAM IP ; et
lors de la génération (S202), par le premier dispositif nœud, d'un second paquet sur la base du premier paquet, le procédé comprend en outre :
la suppression, par le premier dispositif nœud, des informations OAM de couche 3 du troisième dispositif nœud du premier paquet.

4. Procédé selon la revendication 1, dans lequel le système de commande de transmission de réseau comprend en outre un troisième dispositif nœud, le troisième dispositif nœud est un dispositif nœud de saut précédent du premier dispositif nœud, le premier paquet est un paquet qui provient du dispositif nœud source et qui est réacheminé par le troisième dispositif nœud, le troisième dispositif nœud est un dispositif nœud de couche 3, et le premier dispositif nœud est un dispositif nœud de couche 2 ;
le premier dispositif nœud détermine qu'un mode de réacheminement du troisième dispositif nœud est le réacheminement de couche 3, le premier paquet transporte en outre des informations OAM du troisième dispositif nœud, les informations OAM du troisième dispositif nœud comprennent les informations OAM de couche 3 du troisième dispositif nœud, les informations OAM de couche 3 comprennent une instruction OAM de couche 3 du troisième dispositif nœud, et l'instruction OAM de couche 3 est la même que l'instruction OAM IP ; et
lors de la génération (S202), par le premier dispositif nœud, d'un second paquet sur la base du premier paquet, le procédé comprend en outre :
la suppression, par le premier dispositif nœud, des informations OAM de couche 3 du premier paquet, et l'ajout des informations OAM du premier dispositif nœud, les informations OAM du premier dispositif nœud étant des informations OAM de couche 2.

5. Procédé selon la revendication 1, dans lequel le système de commande de transmission de réseau comprend en outre un troisième dispositif nœud, le troisième dispositif nœud est un dispositif nœud de saut précédent du premier dispositif nœud, le premier paquet est un paquet qui provient du dispositif nœud source et qui est réacheminé par le troisième dispositif nœud, le troisième dispositif nœud est un commutateur Ethernet, commutateur ETH, et le premier dispositif nœud est un dispositif d'extrémité fournisseur de commutation multiprotocole par étiquette, PE MPLS ;
le premier paquet transporte en outre des informations OAM ETH, les informations OAM ETH comprennent une instruction OAM ETH et l'instruction OAM ETH est la même que l'instruction OAM IP ; et
lors de la génération (S202), par le premier dispositif nœud, d'un second paquet sur la base du premier paquet, le procédé comprend en outre :
la détermination, par le premier dispositif nœud, du fait qu'un mode de réacheminement du premier dispositif nœud est le réacheminement de couche 2, et l'ajout, par le premier dispositif nœud, d'informations OAM MPLS au premier paquet pour générer le second paquet, les informations OAM MPLS comprenant une instruction OAM MPLS, l'instruction OAM MPLS étant la même que l'instruction OAM IP et les informations OAM MPLS étant les informations OAM du premier dispositif noeud ; ou
la détermination, par le premier dispositif nœud, du fait qu'un mode de réacheminement du premier dispositif nœud est le réacheminement de couche 3, la suppression, par le premier dispositif nœud, des informations OAM ETH du premier paquet, et l'ajout d'une information OAM MPLS, les informations OAM du premier dispositif nœud étant les informations OAM ETH.

6. Procédé selon la revendication 1, dans lequel le système de commande de transmission de réseau comprend en outre un troisième dispositif nœud, le troisième dispositif nœud est un dispositif nœud de saut précédent du premier dispositif nœud, le premier paquet est un paquet qui provient du dispositif nœud source et qui est réacheminé par le troisième dispositif nœud, le troisième dispositif nœud est un dispositif d'extrémité fournisseur de commutation multiprotocole par étiquette, PE MPLS, et le premier dispositif nœud est un commutateur Ethernet, commutateur ETH ;
le premier dispositif nœud détermine qu'un mode de réacheminement du troisième dispositif nœud est le réacheminement de couche 2, le premier paquet transporte en outre des informations OAM du dispositif PE MPLS, les informations OAM du dispositif PE MPLS comprennent des informations OAM ETH et des informations OAM MPLS, les informations OAM ETH comprennent une instruction OAM ETH, l'instruction OAM ETH est la même que l'instruction OAM IP, les informations OAM MPLS comprennent une instruction OAM MPLS et l'instruction OAM MPLS est la même que l'instruction OAM IP ; et
lors de la génération (S202), par le premier dispositif nœud, d'un second paquet sur la base du premier paquet, le procédé comprend en outre :
la suppression, par le premier dispositif nœud, des informations OAM MPLS du premier paquet.

7. Procédé selon la revendication 1, dans lequel le système de commande de transmission de réseau comprend en outre un troisième dispositif nœud, le troisième dispositif nœud est un dispositif nœud de saut précédent du premier dispositif nœud, le premier paquet est un paquet qui provient du dispositif nœud source et qui est réacheminé par le troisième dispositif nœud, le troisième dispositif nœud est un dispositif d'extrémité fournisseur de commutation multiprotocole par étiquette, PE MPLS, et le premier dispositif nœud est un commutateur Ethernet, commutateur ETH ;
le premier dispositif nœud détermine qu'un mode de réacheminement du dispositif PE MPLS est le réacheminement de couche 3, le premier paquet transporte en outre des informations OAM du dispositif PE MPLS, les informations OAM du dispositif PE MPLS comprennent des informations OAM MPLS, les informations OAM MPLS comprennent une instruction OAM MPLS et l'instruction OAM MPLS est la même que l'instruction OAM IP ; et
lors de la génération (S202), par le premier dispositif nœud, d'un second paquet sur la base du premier paquet, le procédé comprend en outre :
la suppression, par le premier dispositif nœud, des informations OAM MPLS du premier paquet, et l'ajout des informations OAM du commutateur ETH, les informations OAM du commutateur ETH étant des informations OAM ETH.

8. Procédé selon l'une quelconque des revendications 1 à 7, dans lequel après la génération (S202), par le premier dispositif nœud, d'un second paquet sur la base du premier paquet, le procédé comprend en outre :
l'envoi (S206), par le premier dispositif nœud, d'un paquet de réponse au dispositif nœud source, le paquet de réponse comprenant un résultat OAM correspondant à l'instruction OAM du premier dispositif nœud dans le second paquet.

9. Procédé selon l'une quelconque des revendications 1 à 7, dans lequel après la génération (S202), par le premier dispositif nœud, d'un second paquet sur la base du premier paquet, le procédé comprend en outre :
l'envoi, par le premier dispositif nœud, d'un paquet de réponse à un dispositif de commande OAM, le paquet de réponse comprenant un résultat OAM correspondant à l'instruction OAM du premier dispositif nœud dans le second paquet.

10. Premier dispositif nœud, dans lequel le premier dispositif nœud appartient à un système de commande de transmission de réseau, le système de commande de transmission de réseau comprend en outre un dispositif nœud source et un deuxième dispositif nœud, et le premier dispositif nœud comprend :
une unité de réception (810), configurée pour recevoir un premier paquet du dispositif nœud source, le premier paquet transportant des informations d'opération, d'administration et de maintenance du protocole Internet, OAM IP, et les informations OAM IP comprenant une instruction OAM IP ;
une unité de génération (820), configurée pour générer un second paquet sur la base du premier paquet, le second paquet transportant les informations OAM IP du premier paquet et des informations d'opération, d'administration et de maintenance, OAM, du premier dispositif nœud, les informations OAM du premier dispositif nœud comprenant une instruction OAM du premier dispositif nœud, et l'instruction OAM du premier dispositif nœud étant la même que l'instruction OAM IP ; et
une unité d'envoi (830), configurée pour envoyer le second paquet au deuxième dispositif nœud, le deuxième dispositif nœud étant un dispositif nœud de saut suivant du premier dispositif nœud ;
**caractérisé en ce que** l'unité de réception (810) est en outre configurée pour recevoir un message de notification du deuxième dispositif nœud, le message de notification étant utilisé pour indiquer un type de réacheminement utilisé par le deuxième dispositif nœud ; et
l'unité de détermination (820) est en outre configurée pour : déterminer que le type de réacheminement utilisé par le deuxième dispositif nœud est différent d'un type de réacheminement du premier dispositif nœud, et générer des informations OAM du deuxième dispositif nœud, les informations OAM du deuxième dispositif nœud comprenant une instruction OAM du deuxième dispositif nœud,
le second paquet comprenant en outre les informations OAM du deuxième dispositif nœud, et l'instruction OAM du deuxième dispositif nœud étant la même que l'instruction OAM IP.

11. Premier dispositif nœud selon la revendication 10, dans lequel le système de commande de transmission de réseau comprend en outre un troisième dispositif nœud, le troisième dispositif nœud est un dispositif nœud de saut précédent du premier dispositif nœud, le premier paquet est un paquet qui provient du dispositif nœud source et qui est réacheminé par le troisième dispositif nœud, le troisième dispositif nœud est un dispositif nœud de couche 2, et le premier dispositif nœud est un dispositif nœud de couche 3 ;
le premier paquet transporte en outre des informations OAM du troisième dispositif nœud, les informations OAM du troisième dispositif nœud comprennent une instruction OAM et l'instruction OAM du troisième dispositif nœud est la même que l'instruction OAM IP ; et
la première unité de génération (820) est spécifiquement configurée pour :
déterminer qu'un mode de réacheminement du premier dispositif nœud est le réacheminement de couche 2, et ajouter des informations OAM de couche 3 du premier dispositif nœud au premier paquet pour générer le second paquet, les informations OAM de couche 3 comprenant une instruction OAM de couche 3, l'instruction OAM de couche 3 étant la même que l'instruction OAM IP, et les informations OAM du premier dispositif nœud comprenant les informations OAM de couche 3 du premier dispositif nœud ; ou
déterminer qu'un mode de réacheminement du premier dispositif nœud est le réacheminement de couche 3, supprimer les informations OAM du troisième dispositif nœud du premier paquet et ajouter les informations OAM du premier dispositif nœud, les informations OAM du premier dispositif nœud étant des informations OAM de couche 3.

12. Premier dispositif nœud selon la revendication 10, dans lequel le système de commande de transmission de réseau comprend en outre un troisième dispositif nœud, le troisième dispositif nœud est un dispositif nœud de saut précédent du premier dispositif nœud, le premier paquet est un paquet qui provient du dispositif nœud source et qui est réacheminé par le troisième dispositif nœud, le troisième dispositif nœud est un dispositif nœud de couche 3, et le premier dispositif nœud est un dispositif nœud de couche 2 ;
le premier dispositif nœud détermine qu'un mode de réacheminement du troisième dispositif nœud est le réacheminement de couche 2, le premier paquet transporte en outre des informations OAM du troisième dispositif nœud, les informations OAM du troisième dispositif nœud comprennent des informations OAM de couche 2 du troisième dispositif nœud et des informations OAM de couche 3 du troisième dispositif nœud, les informations OAM de couche 2 comprennent une instruction OAM de couche 2, l'instruction OAM de couche 2 est la même que l'instruction OAM IP, les informations OAM de couche 3 comprennent une instruction OAM de couche 3, et l'instruction OAM de couche 3 est la même que l'instruction OAM IP ; et
l'unité de génération (820) est spécifiquement configurée pour supprimer les informations OAM de couche 3 du troisième dispositif nœud du premier paquet.

13. Premier dispositif nœud selon la revendication 10, dans lequel le système de commande de transmission de réseau comprend en outre un troisième dispositif nœud, le troisième dispositif nœud est un dispositif nœud de saut précédent du premier dispositif nœud, le premier paquet est un paquet qui provient du dispositif nœud source et qui est réacheminé par le troisième dispositif nœud, le troisième dispositif nœud est un dispositif nœud de couche 3, et le premier dispositif nœud est un dispositif nœud de couche 2 ;
le premier dispositif nœud détermine qu'un mode de réacheminement du troisième dispositif nœud est le réacheminement de couche 3, le premier paquet transporte en outre des informations OAM du troisième dispositif nœud, les informations OAM du troisième dispositif nœud comprennent les informations OAM de couche 3 du troisième dispositif nœud, les informations OAM de couche 3 comprennent une instruction OAM de couche 3 du troisième dispositif nœud, et l'instruction OAM de couche 3 est la même que l'instruction OAM IP ; et
la première unité de génération (820) est spécifiquement configurée pour :
supprimer les informations OAM de couche 3 du premier paquet, et ajouter les informations OAM du premier dispositif nœud, les informations OAM du premier dispositif nœud étant des informations OAM de couche 2.
